# FASCICULE DE BREVET EUROPEEN

(11) **EP 1 341 595 B1**
(45) Date de publication et mention de la délivrance du brevet: **22.03.2006**
(21) Numéro de dépôt: 01991844.0
(22) Date de dépôt: 13.12.2001
(51) Int. Cl.: B01D 53/86

(54) **DISPOSITIF ET PROCEDE D'EPURATION D'UN EFFLUENT GAZEUX**
VORRICHTUNG UND VERFAHREN ZUR ABGASREINIGUNG
DEVICE AND METHOD FOR PURIFYING A GAS EFFLUENT

(30) Priorité: 15.12.2000 EP 00870303
(43) Date de publication de la demande: 10.09.2003
(73) Titulaire: UNIVERSITE CATHOLIQUE DE LOUVAIN, 1348 Louvain la Neuve (BE)
(72) Inventeur: KARTHEUSER, Benoît, B-5590 Ciney (BE); MAY, Bronislav, Henri, B-3090 Overijse (BE); DESPRES, Jean-François, F-06130 Grasse (FR)
(74) Mandataire: Bird, Ariane
(86) Numéro de dépôt international: PCT/EP2001/014742
(87) Numéro de publication internationale: WO 2002/047799

(56) Documents cités:
- EP-A- 0 798 143
- EP-A- 0 826 531
- US-A- 5 643 436
- US-A- 5 919 422
- US-A- 6 063 343

## Description

La présente invention se rapporte à un procédé pour l'épuration d'effluents gazeux et à un dispositif, assemblé ou en kit, pour la mise en oeuvre de ce procédé. Plus généralement, l'invention se rapporte au domaine de la décontamination des gaz, en particulier la purification et la dépollution de l'air.

### ETAT DE LA TECHNIQUE

Il existe un besoin pressant et universel pour éliminer les polluants de l'air de manière rapide, sûre et économique. Par polluants on entend ici des contaminants, notamment gazeux, dont le caractère indésirable peut être dû à la nocivité (toxicité) pour la santé de l'organisme humain ou animal ou pour le bon maintien des lieux dans lesquels, même occasionnellement, l'homme ou l'animal subsiste ou dans lesquels l'homme entrepose des matériaux en vue de leur utilisation ultérieure, auquel cas on pourra parler de désinfection. Ce caractère indésirable peut aussi être attribué à des considérations de confort de la vie humaine, les décontaminants gazeux n'étant pas à proprement parler nocifs mais pouvant être très déplaisants par leur odeur, auquel cas on pourra parler de désodorisation.

Pour traiter ce problème on est à la recherche de moyens ayant la capacité de détruire complètement, dans un effluent gazeux tel que l'air, toute molécule à base d'hydrogène, de carbone et le cas échéant d'oxygène et/ou d'hétéroatomes tels que soufre et azote, telle que solvant hydrocarboné et/ou halogéné, protéine, virus, bactérie, essence de parfum, moisissure, pesticide, bactériophage, etc.

A cet effet il a été proposé d'avoir recours à un traitement de minéralisation (c'est-à-dire de destruction complète par oxydation) de contaminants de l'air, en particulier de composés organiques volatils, par photocatalyse sous rayonnement ultraviolet (ci-après UV) ou visible sur dioxyde de titane. L'intérêt de ce principe a été largement démontré. La réaction s'effectue à température et à pression ambiante, dans des réacteurs utilisant des matériaux de construction courants tels que le verre. Elle peut exploiter des sources de rayonnement UV ou visible de structure simple et peu onéreuse, peu consommatrices d'énergie, en utilisant l'oxygène de l'air comme agent d'oxydation principal, les moyens d'illumination ayant pour fonction d'activer les particules photocatalytiques. La réaction peut minéraliser complètement la plupart des composés organiques volatils, y compris ceux comprenant des hétéroatomes. L'analyse économique publiée par C.S.Turchi et al. dans leur rapport présenté à *Advanced oxidation technologies for water and air remediation,* London, Ontario, Canada (juin 1994) montre que la photocatalyse présente l'avantage d'un dessin modulaire et est d'un intérêt particulier dans le traitement d'effluents gazeux faiblement pollués (c'est-à-dire dont le taux de contaminants ne dépasse pas environ 1.000 ppm en volume) et à des débits de gaz moyens ne dépassant pas environ 34.000 m³/h. Ces conditions constituent le domaine par excellence du traitement de l'air dans des milieux confinés mal ventilés tels que les habitations, les véhicules de transport individuel sur route (automobiles, camions), ou collectif sur rail (trains, métropolitains, tramways) et dans les airs (avions), les élevages d'animaux, les zones d'entreposage, les armoires frigorifiques domestiques et industrielles, etc. ainsi que du traitement des effluents de réacteurs chimiques ou biologiques.

Concernant le mécanisme d'oxydation du traitement photocatalytique d'un gaz, il est admis que l'incidence sur le dioxyde de titane (dans sa forme anatase) de photons d'une énergie suffisante dans le domaine des longueurs d'onde inférieures à 400 nm permet d'éjecter un électron de la bande de valence du semiconducteur vers sa bande de conduction et de créer ainsi un trou positif suffisamment stable et mobile, qui en émergeant à la surface de l'oxyde permet de créer, au contact de composés oxygénés gazeux (tels que la vapeur d'eau, l'oxygène ou l'ozone) adsorbés, des radicaux libres extrêmement oxydants, largement responsables des réactions observées.

Ces constatations ont naturellement conduit à la conception d'une multitude de systèmes en vue de l'exploitation pratique des propriétés du dioxyde de titane, de ses analogues et de ses composés dérivés. Les améliorations recherchées ont le plus souvent porté sur le matériau photocatalytique, le photoréacteur, les sources UV, la chloration de la surface de dioxyde de titane, l'emploi d'air ozoné, etc. Quelques exemples de tels éléments de la littérature sont fournis ci-après à titre illustratif. Ainsi, N.Takeda et al. décrivent dans *Bull.* Chem. *Soc. Jpn.* (1999) 72:1615-1621 l'effet de la mordenite en tant que matériau de support du dioxyde de titane sur la vitesse de photodégradation de propionaldehyde, acétone ou propane gazeux, la concentration initiale de chaque polluant étant fixée à 130 µmole par litre d'air. Les résultats obtenus montrent, pour le catalyseur supporté, qu'il est possible de réduire de 90% la concentration d'acétone en 2,5 heures, celle du propane en 2 heures et celle du propionaldehyde en 0,25 heure. Compte tenu de la masse de catalyseur engagée, du volume du réacteur, de la surface de plaque supportant le catalyseur exposée à la lumière de la source et de la puissance de celle-ci, différentes expressions de la vitesse d'oxydation peuvent être calculées comme suit à partir de ces résultats :

| Polluant | µmole/h/W/g_{cata} | µmole/h/W/m² | µmole/h/W |
|---|---|---|---|
| Acétone | 17,5 | 175 | 0,07 |
| Propane | 22 | 220 | 0,088 |
| Propionaldéhyde | 175 | 1750 | 0,702 |

M.Sauer et al. décrivent dans *Journal of Catalysis* (1994) 149 :81-91 l'oxydation photocatalysée de l'acétone dans l'air selon une vitesse de 0,29 µmole/h/W. La demande de brevet WO 99/24277 montre aussi une réduction d'environ 85% de la concentration d'acétone en présence d'anatase après 30 heures, correspondant à une vitesse de 0,228 µmole/h/W ou encore 47 µmole/h/W/m². Yu et al. ont aussi divulgué dans *J.Phys. Chem. B* (1998) 102 :5094-7 la dégradation de l'acétone en présence d'une solution solide de formule Ti₁₋ₓZrₓO₂ montrant une vitesse initiale de 40 µmole/h/W/g_{cata} ou encore 0,4 µmoles.m²/h/W/g_{cata} pendant la première demi-heure, temps au bout duquel toutefois la réduction de concentration ne dépassait pas 3,4%. Ces publications montrent que l'acétone est largement accepté en tant que composé-modèle pour l'étude des paramètres d'une réaction d'oxydation photocatalytique hétérogène gaz-solide.

De manière très générale, un dispositif d'épuration d'effluent gazeux par oxydation photocatalytique comprend :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur.

Les brevets U.S. n° 5.790.934 et n° 6.063.343 décrivent plusieurs modes de réalisation d'un réacteur destiné à la purification photocatalytique d'un courant de fluide (tel que eau ou air), comprenant soit une surface plissée en forme d'étoile sur laquelle est déposée le catalyseur soit un grand nombre d'ailettes revêtues de catalyseur, ces différents modes ayant en commun que le courant de fluide est dirigé parallèlement aux plans des supports catalytiques. Par ailleurs, la demande de brevet japonais n° 55-116433 divulgue, pour une réaction photochimique, non précisée, d'un système monophasique (gazeux ou liquide) en présence de lumière UV, visible ou infrarouge, l'emploi d'un réacteur (représenté aux figures 1 et 2 de ce document) dans lequel les palettes, autour desquelles serpente le fluide de réaction, ne supportent pas de catalyseur et, étant transparentes et disposées dans la direction des rayons lumineux pour éviter la dispersion et l'absorption de lumière, ne peuvent être prévues à cet effet. Ce dernier document précise en outre que la réaction est uniforme et sans désordre de flux, c'est-à-dire procède de manière homogène et sans turbulence. La demande de brevet japonais n° 11-342317 décrit un dispositif de désinfection de l'air comportant une section d'entrée dans laquelle le gaz à traiter se dilate en abaissant sa vitesse avant de pénétrer dans une zone réactionnelle comprenant des canaux horizontaux séparés par des plaques ondulées, recouvertes de dioxyde de titane, de faible convexité créant une certaine turbulence sur le chemin desquelles sont disposées des sources de photoirradiation transversales au flux de gaz. Ce dispositif est efficace pour le traitement de vapeur d'eau contenant de très faibles concentrations (jusqu'à 10 ppm) de composés organiques tels que triméthylamine ou méthylmercaptan.

Le brevet U.S. 5.919.422 décrit un système de purification comprenant un support (pouvant être un matériau transparent utilisé pour conduire la lumière ordinaire), un film d'oxyde de titane disposé sur le support, et une source de lumière UV pour irradier ce film. Pour la purification de l'air, ce système peut être un ventilateur dont l'une des surfaces des pales supporte le film d'oxyde de titane. Ainsi, l'air s'écoule le long de la surface des pales et une turbulence ne peut être obtenue dans une certaine mesure que par la mise en mouvement rotatif du support du photocatalyseur.

Le brevet U.S. 5.643.436 divulgue un dispositif de désodorisation pour intérieur dans lequel l'air s'écoule aussi parallèlement à un support photocatalytique continu et sans autre turbulence que celle créée par un ventilateur placé à l'entrée du réacteur.

Les demandes de brevets EP-A-798.143 et EP-A-826.531 décrivent des appareils de purification d'air de forme plissée ou ondulée supportant un photocatalyseur pour oxyder les composés soufrés ou éliminer le monoxyde d'azote, l'air s'écoulant parallèlement au support et celui-ci étant conçu pur diminuer la vitesse de l'air.

La demande de brevet international publiée sous n° WO 97/23268 divulgue (figure 1 C) un système d'épuration disposé horizontalement, tel qu'un tuyau circulaire ou elliptique muni de (i) un canal de transfert de gaz d'échappement du côté haut et (ii) des plaques de séparation montées verticalement en dessous dudit canal (i) afin d'effectuer la séparation et la combustion catalytique des particules de suie. Selon l'enseignement de ce document il est important, pour choisir la direction de la pente des plaques (ii), que les particules de suie captées soient mises et restent en contact, par le jeu des forces gravitationnelles, avec le matériau catalytiquement actif appliqué sur ou entre les plaques (ii).

Plusieurs problèmes restent néanmoins à résoudre pour décontaminer un effluent gazeux (en ce compris la désinfection et la désodorisation), en particulier pour éliminer les polluants gazeux de l'air, de manière rapide et économique en utilisant les principes de la photocatalyse. En particulier, un premier problème réside dans la limitation de la surface active de photocatalyseur effectivement accessible à la fois à la lumière incidente et aux gaz, en raison de la porosité habituelle du type de catalyseur utilisé. Un second problème réside dans la compétition des contaminants organiques pour les sites actifs, notamment lorsque les pores sont très petits. Concernant ce dernier paramètre, on note dans la littérature l'emploi de formes de catalyseur ayant des surfaces spécifiques allant d'environ 12 m²/g à environ 340 m²/g, et même jusqu'à 2000 m²/g dans le cas d'aérogels de silice.

L'un des buts de la présente invention consiste à résoudre les problèmes techniques précités en proposant un dispositif d'épuration d'effluent gazeux par photocatalyse dont l'efficacité, mesurée par la vitesse d'élimination d'un ou plusieurs contaminants et exprimée par unités de temps et de puissance lumineuse (et le cas échéant par unité de surface catalytique exposée (illuminée) ou par unité de masse de catalyseur ou encore par unité de densité surfacique de catalyseur), soit significativement supérieure à celle des procédés connus à ce jour. Encore un autre but de la présente invention consiste à proposer un dispositif d'épuration d'effluent gazeux de conception compacte et donc aisé à intégrer dans ou à combiner avec un dispositif existant de traitement de gaz tel que par exemple un dispositif de conditionnement d'air. Un autre but de la présente invention consiste à proposer un procédé d'épuration de gaz capable de traiter efficacement des effluents gazeux dont le taux de contaminants peut atteindre jusqu'à environ 10% (100.000 ppm) en volume. Encore un autre but de la présente invention consiste à proposer un dispositif d'épuration d'effluent gazeux de conception simple et d'entretien aisé, pouvant être fabriqué en grande série à partir de matériaux peu coûteux en faisant appel à des techniques d'assemblage simples et bien connues, et pouvant être exploité en toute sécurité dans un procédé d'épuration d'effluent gazeux peu onéreux pour une grande diversité de contaminants.

### RESUME DE L'INVENTION

La présente invention est basée sur la découverte surprenante que la résolution des problèmes techniques précités ne tient pas tant, comme le suggère l'état de la technique, dans la quantité ou le choix du catalyseur de photooxydation que dans d'autres facteurs tels que :
- d'une part l'agencement intérieur du dispositif réactionnel, en particulier dans la disposition des éléments de support de catalyseur par rapport à la direction d'écoulement du flux gazeux, et plus particulièrement dans le fait que ces éléments de support de catalyseur, le cas échéant associés à d'autres moyens d'obstruction de l'écoulement gazeux et/ou à des moyens supplémentaires de génération de turbulence, sont disposés de manière à assurer un écoulement turbulent, en tout point de la surface catalytique exposée, de l'effluent gazeux à épurer de façon à favoriser le transport des impuretés ou contaminants à oxyder et/ou des produits d'oxydation de ces impuretés vers le catalyseur.
- d'autre part une exploitation plus efficace de l'énergie lumineuse en garnissant le réacteur d'une surface réfléchissante elle-même le cas échéant revêtue d'un catalyseur photosensible.

La présente invention vise à une minéralisation substantielle, de préférence totale, des contaminants/impuretés organiques à oxyder en composants minéraux de base. Plus précisément, l'invention définit un indice de turbulence et une valeur minimale de cet indice pour que le réacteur soit soumis à un régime d'écoulement de l'effluent gazeux à épurer propre à augmenter la vitesse de dégradation des contaminants et par conséquent à augmenter l'efficacité globale du procédé d'épuration. Pour atteindre cette valeur minimale de l'indice de turbulence, l'invention prévoit également qu'au moins deux moyens d'obstruction (chacun étant ci-après également désigné sous le terme de "restriction") soient disposés à l'intérieur du réacteur, de préférence de manière orthogonale ou quasi-orthogonale (cette notion étant définie ci-après) à l'axe du réacteur, lesdits moyens d'obstruction (restrictions) étant de préférence en nombre suffisant et de forme appropriée pour procurer un ralentissement de 10% à 90% environ de l'effluent gazeux à épurer par rapport au même réacteur dépourvu de moyen d'obstruction (restriction). Ces moyens d'obstruction (restrictions) peuvent aussi avantageusement être revêtus de catalyseur. Pour concourir à l'efficacité globale de l'épuration, l'invention prévoit également que l'intérieur du réacteur puisse être au moins partiellement garni d'une surface réfléchissante, elle-même le cas échéant revêtue de catalyseur.

Dans son mode d'expression le plus général, la présente invention concerne donc un procédé pour l'épuration d'un effluent gazeux contenant des contaminants dans un dispositif comprenant :
- un réacteur ayant un axe longitudinal et comprenant au moins une entrée pour le gaz à épurer et au moins une sortie pour le gaz épuré,
- au moins une source de rayonnement ultraviolet ou visible, et
- au moins un élément de support disposé à l'intérieur du réacteur et revêtu d'un catalyseur formant une surface catalytique exposée et capable d'oxyder au moins partiellement les contaminants sous l'action de rayonnement ultraviolet ou visible délivré par la source,
caractérisé d'une part par la présence, à l'intérieur du réacteur, d'au moins deux moyens d'obstruction, chacun desdits moyens d'obstruction obstruant partiellement l'écoulement de l'effluent gazeux depuis ladite entrée jusqu'à ladite sortie et chacun desdits moyens d'obstruction générant une zone de gaz turbulent de son côté aval par rapport à l'écoulement de l'effluent gazeux, la surface de chacun desdits moyens d'obstruction telle que projetée sur un plan orthogonal à l'axe longitudinal du réacteur occupant au moins 1/3 (un tiers) de la section interne du réacteur disponible pour l'écoulement de l'effluent gazeux, et d'autre part par le fait qu' une surface catalytique est disposée dans chaque dite zone de gaz turbulent de façon à ce que l'écoulement de gaz turbulent soit incident sur ladite surface catalytique. Selon un mode de réalisation avantageux de l'invention, l'un au moins desdits moyens d'obstruction est un élément de support.

L'efficacité d'un tel dispositif est telle qu'il permet d'opérer un procédé d'épuration d'un effluent gazeux contenant des contaminants en oxydant 90% d'une impureté-modèle constituée d'acétone à une vitesse très supérieure à celles connues dans l'art antérieur et que l'on peut exprimer par l'une quelconque des unités suivantes :
- au moins environ 1 µmole d'impureté-modèle par heure, par watt de puissance de la source et par unité de densité surfacique (exprimée en gramme par mètre carré) de catalyseur.
- au moins environ 300 µmoles d'impureté-modèle par heure, par watt de puissance de la source et par mètre carré de surface catalytique exposée (comprenant la surface d'élément de support illuminé par la source), ou bien
- au moins environ 100 µmoles d'impureté-modèle par heure, par watt de puissance de la source et par gramme de catalyseur, ou encore
- au moins environ 2 µmoles d'impureté-modèle par heure et par watt de puissance de la source.
Comme exprimé ici et dans le reste de la description, chacune des vitesses minimales d'oxydation de 90% d'impureté-modèle, indiquées ci-dessus comme caractéristiques du procédé selon l'invention, doit s'entendre de la vitesse moyenne (calculée entre le début de l'oxydation photocatalytique et le moment où 90% de l'impureté-modèle a disparu) mesurée dans des conditions standardisées, c'est-à-dire sous pression atmosphérique à 25°C dans l'air à un taux d'humidité relative de 50%, et pour des concentrations initiales d'impureté-modèle dans le flux gazeux (en particulier l'air) au moins égales à 500 ppm en volume. En effet, il est bien connu de l'homme de l'art dans le domaine considéré que la vitesse d'épuration diminue lorsque la concentration initiale de l'impureté à épurer diminue.

De préférence, le régime turbulent d'écoulement du gaz à épurer est caractérisé par un indice de turbulence, calculé selon la formule I_{T} = Re* N / β f dans laquelle
- Re* est un nombre exprimé par Re* = (4 p Vₘ S) / (P v),
- β = s / S est un paramètre de porosité dont la valeur est égale à 1 si aucun moyen d'obstruction n'est présent à l'intérieur du réacteur,
- f est un facteur de friction correspondant au rapport de toutes les surfaces présentes dans le réacteur à la surface développée par le réacteur en l'absence de moyen d'obstruction, égal à Σ surfaces internes développées par le réacteur / surface d'un cylindre de périmètre P,
- S est la surface moyenne de la section orthogonale interne du réacteur en l'absence de moyen d'obstruction,
- ρ est la masse volumique de l'effluent gazeux à épurer,
- Vₘ est la vitesse moyenne de l'effluent gazeux à épurer parallèlement à l'axe longitudinal du réacteur,
- P est la somme du périmètre interne moyen du réacteur et du périmètre externe moyen de la plus petite enveloppe géométrique comprenant la (les) source(s) de rayonnement, lorsque celle(s)-ci est (sont) disposée(s) à l'intérieur du réacteur,
- ν est la viscosité dynamique de l'effluent gazeux à épurer,
- N est le nombre de moyen d'obstruction dans le réacteur ou bien, en l'absence de moyen d'obstruction, est égal à 1, et
- s est la surface moyenne de l'ouverture définie par la section orthogonale interne du réacteur au maximum des moyens d'obstruction,
au moins égal à 2.000.

De préférence selon la présente invention, la source de rayonnement ultraviolet ou visible est disposée à l'intérieur du réacteur. Toutefois l'invention n'est pas limitée à ce mode de réalisation et inclut aussi la possibilité de placer la source de rayonnement ultraviolet ou visible à l'extérieur du réacteur, à condition toutefois que le réacteur soit alors transparent au rayonnement.

Conformément aux buts précités et au problème technique à résoudre, le procédé selon l'invention est capable de minéraliser majoritairement les contaminants ou impuretés organiques contenus dans l'effluent gazeux, c'est-à-dire de convertir plus de 50% en moles desdits contaminants en composants minéraux de base correspondants, tels que notamment dioxyde de carbone, eau, azote, halogénure d'hydrogène, SO₃ et sulfates.

Les principes de l'invention seront maintenant exposés par référence aux dessins en annexe et aux modes détaillés d'exécution qui suivent.

### BREVE DESCRIPTION DES DESSINS

La figure 1 représente un premier mode de réalisation d'un réacteur photocatalytique pour l'épuration d'effluents gazeux selon l'invention.
La figure 2 représente un second mode de réalisation d'un réacteur photocatalytique pour l'épuration d'effluents gazeux selon l'invention.
La figure 3 représente un réacteur photocatalytique selon l'art antérieur utilisé à titre d'exemple comparatif.
La figure 4 représente un montage en circuit fermé utilisant un réacteur photocatalytique selon l'invention pour l'épuration de l'acétone.
La figure 5 représente la cinétique de disparition de l'acétone dans un réacteur selon le premier mode de réalisation de l'invention, avec et sans surface réfléchissante.
La figure 6 représente l'évolution du gaz carbonique produit par le procédé selon l'invention en fonction de l'acétone consommée.
La figure 7 représente l'évolution du gaz carbonique produit par un procédé de l'art antérieur en fonction de l'acétone consommée.
La figure 8 représente la cinétique de disparition de l'acétone dans un réacteur selon le premier mode de réalisation de l'invention, avec et sans catalyseur sur la surface réfléchissante.
La figure 9 représente la cinétique de disparition de l'acétone dans des réacteurs selon les premiers et second modes de réalisation de l'invention, c'est-à-dire avec et sans restrictions complémentaires au passage du gaz à épurer.
La figure 10 (A et B) représente un troisième mode de réalisation d'un réacteur photocatalytique pour l'épuration d'effluents gazeux selon l'invention.
La figure 11 représente la cinétique de disparition de l'acétone dans un réacteur selon le troisième mode de réalisation de l'invention.
La figure 12 représente schématiquement d'autres modes de réalisation d'un dispositif d'épuration d'effluents gazeux selon l'invention.

### DESCRIPTION DETAILLEE DE L'INVENTION

De manière conventionnelle le dispositif d'épuration selon l'invention comprend tout d'abord un réacteur ayant au moins une entrée pour l'effluent gazeux à épurer et au moins une sortie pour l'effluent gazeux décontaminé, à l'intérieur duquel est disposé au moins un élément de support revêtu d'un catalyseur de photooxydation, c'est-à-dire capable d'oxyder au moins partiellement, sous l'action d'un rayonnement ultraviolet ou visible, les impuretés ou contaminants contenus dans l'effluent gazeux. De préférence, l'entrée du gaz et la sortie du gaz sont disposées à des extrémités opposées du réacteur, quelque soit la forme de celui-ci. Eventuellement, elles peuvent aussi être disposées à une même extrémité du réacteur, le flux gazeux décrivant alors une trajectoire en forme de U. La forme, la matière et les dimensions du réacteur peuvent être quelconques, sous réserve toutefois d'être adaptées à celles des moyens d'obstruction et aux caractéristiques de la source de rayonnement. Ainsi le réacteur devra être constitué d'une matière transparente au rayonnement si la source de rayonnement est disposée à l'extérieur du réacteur. Comme exemples non limitatifs de matières pouvant constituer le réacteur, on peut citer toute matière inerte vis-à-vis du rayonnement ultraviolet ou visible et de préférence apte à être garnie d'une surface réfléchissante, telle que le verre, l'aluminium, l'acier galvanisé, l'acier inoxydable, les résines synthétiques transparentes telles que le polyméthacrylate de méthyle transparent, le polycarbonate, etc. Bien que le réacteur puisse aussi être de forme cubique ou sphérique, il peut être préférable qu'une dimension longitudinale du réacteur soit plus grande qu'une dimension transversale dudit réacteur. Pour cette raison, les formes parallélépipédiques et cylindriques sont généralement préférées. Les dimensions du réacteur doivent être adaptées, de manière connue de l'homme de l'art, au volume d'effluent gazeux à épurer et, le cas échéant, à l'environnement immédiat dans lequel ledit réacteur est placé, par exemple lorsqu'il est intégré dans ou combiné avec un dispositif existant de traitement de gaz tel que par exemple un dispositif de conditionnement d'air. De préférence, la section interne du réacteur ne dépasse pas 50 fois environ la section interne du plus petit tube pouvant comprendre l'ensemble des sources de rayonnement. De préférence également, la longueur de la partie du réacteur comprenant les éléments de support de catalyseur est comprise entre 1 et 15 fois environ le périmètre intérieur de ce réacteur. Grâce à l'efficacité exceptionnelle du dispositif selon l'invention, les dimensions du réacteur peuvent être très réduites, par exemple de l'ordre de quelques centimètres à quelques dizaines de centimètres pour un dispositif à usage domestique, et de l'ordre du mètre ou de quelques mètres pour un dispositif à usage industriel.

Conformément à la présente invention, le réacteur comprend au moins deux moyens d'obstruction, encore désignés ci-après sous le terme de restrictions, obstruant partiellement l'écoulement de l'effluent gazeux entre l'entrée et la sortie du réacteur et générant une zone de gaz turbulent, et une surface catalytique est disposée dans chaque zone de gaz turbulent de façon à ce que l'écoulement de gaz turbulent soit incident sur ladite surface catalytique. Sans vouloir être lié par une théorie particulière, il paraît raisonnable d'avancer que l'écoulement turbulent permet l'apport et l'élimination plus efficaces des réactifs et produits d'oxydation résultants tout en évitant la création d'un gradient de concentration dans l'environnement immédiat du catalyseur. Il favorise ainsi l'homogénéisation du fluide dans cet environnement immédiat et optimise la différence de potentiel chimique entre les produits adsorbés et ceux qui se trouvent dans la phase gazeuse en contact immédiat avec le solide. En effet, contrairement à un art antérieur tel que WO 97/23268 exigeant un catalyseur partiellement ou complètement fondu pour la séparation de contaminants liquides et solides, la présente invention est de préférence basée sur une réaction hétérogène de type solide-gaz. De préférence, le nombre et la forme des moyens d'obstruction (restrictions) sont choisis de manière à procurer un ralentissement de 10% à 90% environ de l'effluent gazeux à épurer par rapport à la vitesse qu'aurait celui-ci dans le même réacteur en l'absence de moyens d'obstruction (restrictions). La surface de chaque moyen d'obstruction, telle que projetée sur un plan orthogonal à l'axe longitudinal du réacteur, occupe au moins 1/3 (un tiers), et de préférence au moins 1/2 (la moitié), de la section interne du réacteur disponible au passage, c'est-à-dire pour l'écoulement, de l'effluent gazeux. Lorsque la source de rayonnement est disposée à l'intérieur du réacteur, il s'agit de la section disponible entre la paroi interne du réacteur et la susdite source de rayonnement. L'un au moins des moyens d'obstruction (restrictions) peut être un élément de support revêtu de catalyseur. Par exemple, si le dispositif selon l'invention comprend deux moyens d'obstruction, l'un d'eux peut être un élément de support tandis que l'autre est une restriction non revêtue de catalyseur, ou bien les deux sont des éléments de support. Autrement dit, restrictions non revêtues de catalyseur et éléments de support ne diffèrent que par la présence ou non de catalyseur à leur surface mais ont pour fonction commune, par leur disposition à l'intérieur du réacteur, de participer à l'établissement d'un régime turbulent de l'écoulement gazeux. A l'exception de ce qui concerne le catalyseur, leurs caractéristiques seront donc maintenant décrites indistinctement. De préférence, et contrairement à l'art antérieur prévoyant un ou plusieurs éléments de support occupant toute la longueur du réacteur, les restrictions sont réparties de manière discontinue dans la dimension longitudinale, c'est-à-dire selon l'axe longitudinal, du réacteur. Autrement dit, le réacteur contient une quantité discrète (un nombre fini) de moyens d'obstruction (restrictions) répartis à intervalles, réguliers ou non, le long du réacteur. L'épaisseur et le nombre total de moyens d'obstruction (restrictions) dans le réacteur ne sont pas des paramètres critiques de la présente invention, pour autant qu'ils concourent à assurer un écoulement turbulent de l'effluent gazeux à épurer de façon à favoriser le transport des contaminants/impuretés à oxyder et/ou des produits d'oxydation de ces contaminants vers le catalyseur. Le nombre de moyens d'obstruction (restrictions) non revêtus de catalyseur n'est pas non plus un paramètre critique de la présente invention et peut être inférieur, égal ou supérieur à celui des éléments de support. Comme l'homme de l'art le conçoit aisément, le nombre de moyens d'obstruction (restrictions) ne doit pas être si élevé et leur espacement ne doit pas être si faible qu'il conduise à limiter la formation d'écoulements turbulents de l'effluent gazeux entre les éléments de support. En d'autres termes, l'espacement des moyens d'obstruction (restrictions) doit être commensurable avec leur dimension transversale, plus particulièrement avec l'espace moyen disponible à l'intérieur du réacteur, par exemple celui compris entre la paroi du réacteur et l'enveloppe géométrique (par exemple le cylindre interne) comprenant la source ou l'ensemble des sources lumineuses lorsque celles-ci sont disposées à l'intérieur du réacteur. Le nombre de moyens d'obstruction restrictions est aussi en rapport avec la dimension longitudinale du réacteur. Des expériences rapportées dans les exemples ci-après, il résulte qu'un nombre d'environ 2 à 20, de préférence 5 à 15 environ, moyens d'obstruction est habituellement suffisant pour obtenir le régime turbulent recherché. Un seul élément de support peut s'avérer suffisant, notamment lorsqu'une dimension longitudinale du réacteur n'est pas plus grande qu'une dimension transversale dudit réacteur.

La forme, la matière et les dimensions des moyens d'obstruction, en ce compris les éléments de support, peuvent être choisis dans de vastes gammes, pour autant qu'ils soient disposés de manière à assurer un écoulement turbulent de l'effluent gazeux à épurer propre à favoriser le transport des contaminants/impuretés à oxyder et/ou des produits d'oxydation de ces impuretés vers le catalyseur, de préférence un écoulement turbulent caractérisé par l'indice de turbulence I_{T} mentionné précédemment. De préférence, les moyens d'obstruction sont disposés perpendiculairement ou quasi-perpendiculairement à la direction principale, c'est-à-dire la direction d'écoulement, de l'effluent gazeux à épurer, telle que définie par exemple (dans le cas d'une entrée et d'une sortie disposées aux extrémités opposées du réacteur) par la droite reliant l'entrée du gaz à épurer et la sortie du gaz épuré. Par quasi-perpendiculairement au sens de la présente invention, on entend que le plan moyen (par exemple le plan de symétrie) dans lequel s'inscrit le moyen d'obstruction fait avec la direction principale d'écoulement de l'effluent gazeux à épurer un angle compris entre 60° et 120°, de préférence compris entre 70° et 110° environ, et encore de préférence compris entre 80° et 100° environ. Par exemple le moyen d'obstruction peut être une structure plane et mince, c'est-à-dire de faible épaisseur par rapport à la dimension (longitudinale) du réacteur, de forme identique ou similaire à, ou différente de, la section transversale du réacteur, et le cas échéant centrée sur l'axe du réacteur ou sur l'axe de la source de rayonnement. Cette forme peut être un disque, une ellipse, un polygone ou toute autre forme géométrique appropriée à un bon contact avec les contaminants à oxyder et aisée à fabriquer de manière peu onéreuse.

Selon un mode avantageux de réalisation de la présente invention, la (les) source(s) de rayonnement ultraviolet ou visible est (sont) placée(s) selon l'axe longitudinal du réacteur et, dans ce cas, chaque moyen d'obstruction est de préférence percé d'un trou (de forme adaptée à celle de la source) en son centre de manière à être disposé autour de la source mais perpendiculairement ou quasi-perpendiculairement à l'axe du réacteur.

La nature du matériau constituant les moyens d'obstruction du dispositif selon l'invention n'est pas un paramètre critique de la présente invention. Tout matériau de résistance connue pour pouvoir supporter durablement l'effet d'un rayonnement ultraviolet ou visible, la turbulence du flux gazeux et, lorsque le moyen d'obstruction est un élément de support, un catalyseur de photo-oxydation peut être utilisé dans le contexte de la présente invention. Des exemples non limitatifs de tels matériaux sont le verre et des métaux, de préférence des métaux offrant une réflexion satisfaisante du rayonnement lumineux tels que l'aluminium ou l'acier inoxydable. L'élément de support peut comporter une surface ou structure poreuse, telle qu'une grille ou un tamis métallique, apte à recevoir le dépôt d'un catalyseur de photo-oxydation.

La source de rayonnement ultraviolet ou visible faisant partie du dispositif selon l'invention est de préférence une source de rayonnement courante du commerce. S'agissant de source à rayonnement ultraviolet, elle étale généralement son rayonnement dans une gamme de longueurs d'ondes inférieures à 400 nm environ. S'agissant de source à rayonnement visible, elle étale généralement son rayonnement dans une gamme de longueurs d'ondes de 400 à 700 nm environ. Le type de construction (notamment la matière et la géométrie) et le mode de fonctionnement (notamment le gaz émetteur) de la source ne sont pas des paramètres critiques de la présente invention. Comme exemples de sources à rayonnement ultraviolet, on peut citer notamment des sources à basse pression comprenant un gaz de mercure, néon, argon, krypton ou xenon ou leurs mélanges, comme il est bien connu de l'homme de l'art. L'enveloppe de la source peut, de manière conventionnelle, être constituée d'un tube de céramique, de verre ordinaire (quartz fondu ou silice) ou de verre à solarisation réduite (selon la technologie de source à longue durée développée par la société Philips) et peut le cas échéant être revêtue de phosphore. La puissance nominale de la source, c'est-à-dire sa puissance consommée, n'est pas un paramètre critique de la présente invention et peut varier de 2 à 500 watts environ. Toutefois, en raison de l'efficacité exceptionnelle du dispositif selon l'invention, il n'est pas nécessaire d'avoir recours à des sources de forte puissance comme dans l'art antérieur. Comme le confirment les expériences rapportées dans les exemples suivants, il est souhaitable que la source procure une intensité lumineuse moyenne sur le photocatalyseur, c'est-à-dire une puissance par unité de surface de photocatalyseur illuminé, d'environ 20 à 500 mW/cm², de préférence 50 à 300 mW/cm². Selon la présente invention, la source de rayonnement ultraviolet ou visible peut également être une source de lumière naturelle, éclairante de l'extérieur du réacteur ou bien par le moyen de guides d'ondes avec formation éventuelle de convection thermique.

Selon un autre mode avantageux de réalisation de la présente invention, l'intérieur du réacteur est au moins partiellement garni d'une surface réfléchissante, c'est-à-dire capable de réfléchir une partie substantielle du rayonnement ultraviolet ou visible de la source, comme par exemple être construit à l'aide d'un matériau réfléchissant ou d'un matériau recouvert d'un revêtement réfléchissant, ou bien garni d'une feuille d'aluminium de faible épaisseur (25 à 100 µm environ). La nature de la surface réfléchissante n'est pas un paramètre critique de la présente invention, sous réserve du niveau de réflexion du rayonnement ultraviolet ou visible. Selon une variante de ce mode de réalisation, la surface réfléchissante peut être revêtue, de préférence en très fine couche (afin de ne pas trop abaisser le niveau de réflexion du rayonnement ultraviolet ou visible), d'un catalyseur capable d'oxyder au moins partiellement les contaminants/impuretés contenus dans l'effluent gazeux sous l'action du rayonnement ultraviolet ou visible de la source, c'est-à-dire un catalyseur de photooxydation. Ce catalyseur peut être le même que celui déposé sur les éléments de support ou bien un autre catalyseur. De préférence la surface réfléchissante (en l'absence de dépôt de catalyseur) procure, dans la gamme de longueurs d'onde du rayonnement ultraviolet ou visible considéré, une réflexion supérieure à 50% environ (telle que mesurée selon une technique usuelle faisant appel à une sphère d'intégration), et plus particulièrement supérieure à 80%. Cette surface réfléchissante peut supporter une couche de catalyseur de photooxydation d'épaisseur telle qu'elle soit capable d'absorber au plus 65% environ de la lumière active d'un point de vue photochimique. La surface réfléchissante, lorsqu'elle est revêtue d'un tel catalyseur, procure donc de préférence une réflexion de la lumière photochimiquement active d'au moins 20% environ, de préférence au moins 50% environ.

Le dispositif selon l'invention peut en outre comprendre ou être fonctionnellement associé à des moyens propres à amplifier un écoulement turbulent du gaz à épurer dans le réacteur, comme par exemple des moyens de ventilation forcée ou des moyens de convection thermique. De préférence, lesdits moyens d'amplification de la turbulence sont placés à proximité de l'entrée du réacteur pour une meilleure efficacité. Par " fonctionnellement associé à ", on entend que ces moyens ne sont pas nécessairement liés au réacteur par un moyen physique de liaison tel que tige ou autre système d'accrochage mais, par leur positionnement par rapport au réacteur, agissent en synergie avec les moyens d'obstruction pour augmenter l'indice de turbulence (tel que défini plus haut) ou le caractère turbulent du régime d'écoulement dans le réacteur. En l'absence de liaison physique entre ces éléments, la présente invention concerne donc aussi un kit comprenant d'une part les moyens d'amplification de la turbulence et d'autre part le dispositif d'épuration d'effluent gazeux tel que décrit ci-dessus. De préférence lesdits moyens d'amplification de la turbulence permettent d'assurer, seuls ou en combinaison avec les autres éléments présents dans le réacteur, à savoir les éléments de support et éventuellement les restrictions, une vitesse linéaire moyenne de transit (dépendant aussi du volume de gaz à traiter) de l'effluent gazeux à épurer dans le réacteur comprise entre 0,05 et 10 m/s environ, de préférence entre 0,1 et 3 m/s environ. De façon conventionnelle, cette vitesse peut être mesurée au moyen de tout dispositif approprié bien connu de l'homme de l'art, tel qu'un anémomètre, placé par exemple à proximité de la sortie du réacteur.

La présente invention concerne aussi, notamment à destination des utilisateurs qui souhaitent assembler eux-mêmes un dispositif d'épuration d'effluent gazeux à partir de ses éléments constitutifs, un ensemble des pièces essentielles à la construction d'un dispositif tel que décrit précédemment. Cet ensemble prendra par exemple la forme d'un kit d'éléments destinés à constituer, par assemblage, un dispositif d'épuration d'un effluent gazeux contenant des contaminants, ledit kit comprenant :
- un réacteur ayant un axe longitudinal et comprenant au moins une entrée pour le gaz à épurer et au moins une sortie pour le gaz épuré,
- au moins une source de rayonnement ultraviolet ou visible, et
- au moins un élément de support, destiné à être disposé à l'intérieur du réacteur et revêtu d'un catalyseur formant une surface catalytique exposée capable d'oxyder au moins partiellement les contaminants sous l'action de rayonnement ultraviolet ou visible délivré par la source,
ledit kit étant caractérisé en ce qu'il comprend au moins deux moyens d'obstruction destinés à être disposés à l'intérieur du réacteur, chacun desdits moyens d'obstruction étant prévu pour obstruer partiellement l'écoulement de l'effluent gazeux depuis ladite entrée jusqu'à ladite sortie et pour générer une zone de gaz turbulent de son côté aval par rapport à l'écoulement de l'effluent gazeux, la surface de chacun desdits moyens d'obstruction telle que projetée sur un plan orthogonal à l'axe longitudinal du réacteur occupant au moins 1/3 (un tiers) de la section interne du réacteur disponible pour l'écoulement de l'effluent gazeux, et par le fait qu'une surface catalytique est disposée dans chaque dite zone de gaz turbulent de façon à ce que l'écoulement de gaz turbulent soit incident sur ladite surface catalytique. Ainsi un tel kit comprend en général au moins quatre éléments (réacteur, source et deux moyens d'obstruction dont l'un au moins est un élément de support) ainsi que les moyens nécessaires pour les assembler et les connexions électriques nécessaires pour assurer l'alimentation de la source. Il peut comprendre un nombre d'éléments supérieur à quatre, notamment s'il y a davantage que deux moyens d'obstruction et/ou si le kit comprend en outre des moyens d'amplification de la turbulence tels que définis ci-dessus, tels que des moyens de ventilation forcée ou de convection thermique. Le kit comprend habituellement en outre une notice d'instructions à l'intention de l'utilisateur pour expliquer et faciliter la méthode d'assemblage des éléments entre eux. Pour des raisons de commodité d'assemblage il peut être préférable, dans le cas d'un kit, que la source soit destinée à être placée à l'extérieur du réacteur. Le réacteur et les moyens d'obstruction du kit peuvent comporter chacune des caractéristiques plus spécifiques décrites précédemment.

La technique utilisée pour déposer le catalyseur de photooxydation sur l'élément de support, et le cas échéant sur la surface réfléchissante, du dispositif selon l'invention n'est pas un paramètre critique de la présente invention. Toute méthode connue pour procurer un dépôt durable et, de préférence, d'épaisseur sensiblement homogène peut être utilisée dans le contexte de la présente invention. Des exemples non limitatifs de telles méthodes sont bien connus de l'homme de l'art et incluent le dépôt chimique en phase vapeur, le revêtement par centrifugation (aussi connu sous le terme de " spin coating " et consistant à recouvrir la surface d'une plaque en la faisant tourner rapidement selon un axe perpendiculaire à sa surface et en laissant s'étaler une goutte de solution placée en son centre) et le trempage dans une suspension catalytique dans un solvant organique suivi d'une étape de séchage à une température n'induisant pas une modification de la forme cristalline du catalyseur, de préférence une température comprise entre environ 10°C et 240°C, et encore de préférence entre environ 20°C et 120°C, la durée du séchage étant naturellement une fonction inverse de la température de séchage. Dans la méthode de trempage, le cycle de trempage et séchage peut être répété autant de fois que nécessaire jusqu'à obtention de la masse de catalyseur désirée par unité de surface, soit typiquement entre 0,5 g/m² et 15 g/m² environ. La méthode de dépôt la plus appropriée sera choisie, conformément aux connaissances générales de l'homme du métier, en fonction notamment de l'épaisseur de la couche de catalyseur désirée. Habituellement, le dépôt d'une couche de catalyseur d'épaisseur comprise entre 1 µm et 5 µm environ est satisfaisant pour atteindre les buts de la présente invention.

La nature du catalyseur de photo-oxydation déposé sur l'élément de support du dispositif selon l'invention et/ou utilisé dans le procédé selon l'invention n'est pas un paramètre critique de la présente invention. Tout catalyseur de type semi-conducteur connu pour oxyder, sous l'effet d'un rayonnement ultraviolet ou visible, des espèces oxydables présentes à l'état d'impuretés dans un gaz peut être utilisé dans le contexte de la présente invention. La littérature fournit de très nombreux exemples de tels catalyseurs, parmi lesquels les dioxydes de titane, de silicium, d'étain et de zirconium, l'oxyde de zinc, les trioxydes de tungstène et de molybdène, l'oxyde de vanadium, le carbure de silicium, les sulfures de zinc et de cadmium, le séléniure de cadmium, leurs mélanges en toutes proportions et leurs solutions solides. Ces catalyseurs peuvent en outre être dopés par l'addition de faibles proportions (c'est-à-dire jusqu'à 10% environ en poids) d'autres métaux ou de composés d'autres métaux tels que des métaux précieux, en particulier le platine, l'or et le palladium, ou des terres rares (tels que le niobium et le ruthénium). Le cas échéant, le catalyseur de photooxydation peut être déposé sur un support tel qu'une zéolithe, par exemple la mordénite. Dans le cas de l'oxyde de titane, le catalyseur peut aussi être préparé, selon les techniques bien connues de l'homme de l'art, sous forme d'aérogel ayant une surface spécifique élevée. En raison de l'efficacité exceptionnelle du dispositif selon l'invention, il n'est toutefois pas nécessaire d'avoir recours à des catalyseurs d'activité très élevée, de fabrication complexe et :ou de prix de revient élevé, et le dioxyde de titane dans sa forme cristalline anatase convient généralement bien.

Selon un autre aspect, l'invention se rapporte aussi à un dispositif d'épuration d'un effluent gazeux contenant des contaminants, comprenant :
- un réacteur ayant un axe longitudinal et comprenant au moins une entrée pour le gaz à épurer et au moins une sortie pour le gaz épuré,
- au moins une source de rayonnement ultraviolet ou visible, et
- au moins un élément de support, disposé à l'intérieur du réacteur et revêtu d'un catalyseur formant une surface catalytique exposée et capable d'oxyder au moins partiellement les contaminants sous l'action de rayonnement ultraviolet ou visible délivré par la source, ledit élément de support faisant fonction de restriction à l'écoulement de l'effluent gazeux,
caractérisé en ce que le réacteur est soumis à un régime turbulent d'écoulement de l'effluent gazeux gazeux à épurer défini par un indice de turbulence, calculé selon la formule I_{T} = Re* N / β f dans laquelle
- Re* est un nombre exprimé par Re* = (4 ρ Vₘ S) / (P v),
- β = s / S est un paramètre de porosité dont la valeur est égale à 1 si aucune restriction n'est présente à l'intérieur du réacteur,
- f est un facteur de friction correspondant au rapport de toutes les surfaces présentes dans le réacteur à la surface développée par le réacteur en l'absence de restriction(s), égal à Σ surfaces internes développées par le réacteur / surface d'un cylindre de périmètre P,
- S est la surface moyenne de la section orthogonale interne du réacteur en l'absence de restriction(s),
- ρ est la masse volumique de l'effluent gazeux à épurer,
- Vₘ est la vitesse moyenne de l'effluent gazeux à épurer parallèlement à l'axe longitudinal du réacteur,
- P est la somme du périmètre interne moyen du réacteur et du périmètre externe moyen de la plus petite enveloppe géométrique comprenant la (les) source(s) de rayonnement, lorsque celle(s)-ci est (sont) disposée(s) à l'intérieur du réacteur,
- ν est la viscosité dynamique de l'effluent gazeux à épurer,
- N est le nombre de restrictions dans le réacteur ou bien, en l'absence de restriction, est égal à 1, et
- s est la surface moyenne de l'ouverture définie par la section orthogonale interne du réacteur au maximum des restrictions, au moins égal à 2.000.

Chacun des termes utilisés dans la définition de cet autre aspect de l'invention doit se comprendre en accord avec les explications détaillées ci-dessus.

Selon encore un autre aspect, la présente invention concerne aussi un procédé d'épuration d'un effluent gazeux utilisant un dispositif d'épuration tel que décrit en détail précédemment. Un tel dispositif rend ledit procédé apte à épurer l'effluent gazeux de façon extrêmement efficace, à la fois à l'égard de la proportion de contaminants éliminés et à l'égard de la vitesse d'élimination. De manière habituelle dans la technique, cette efficacité peut être exprimée en terme de vitesse d'oxydation d'une proportion déterminée d'une impureté-modèle. Par convention, on choisit la vitesse moyenne d'oxydation de 90% d'une impureté-modèle constituée d'acétone, telle que mesurée dans les conditions standardisées mentionnées précédemment. Cette convention étant choisie, il demeure possible de choisir l'expression de la vitesse par référence à chaque paramètre du dispositif et du procédé selon l'invention, à savoir la puissance de la source, la surface catalytique totale exposée, la masse de catalyseur ou la durée d'exposition, ou encore par référence à toute combinaison de deux ou plusieurs de ces paramètres.

Ce mode d'expression de l'efficacité ne signifie ni que l'invention soit limitée à l'épuration de l'acétone ni que des vitesses encore supérieures à celles mentionnées ci-dessus ne puissent être atteintes, dans les conditions standard mentionnées précédemment, pour l'épuration d'autres composés organiques. On indiquera ci-après quelques valeurs de l'efficacité pour d'autres composés organiques courants tels que l'ammoniac, l'isopropanol ou l'éthylamine.

En référence à un premier mode d'expression de l'efficacité, l'invention permet d'atteindre une vitesse moyenne d'au moins environ 1 µmole d'impureté-modèle par heure, par watt de puissance de la source et par unité (gramme par mètre carré) de densité surfacique du catalyseur. De préférence cette vitesse est d'au moins environ 5 µmoles d'impureté-modèle, et peut couramment atteindre jusqu'à environ 50 µmoles d'impureté-modèle par heure, par watt de puissance de la source et par unité (gramme par mètre carré) de densité surfacique du catalyseur. Des vitesses (calculées à 90% d'oxydation) dans une gamme d'environ 4 à environ 60 µmoles d'impureté par heure, par watt de puissance de la source et par unité (gramme par mètre carré) de densité surfacique du catalyseur sont couramment accessibles pour des composés organiques tels que l'ammoniac, l'isopropanol ou l'éthylamine.

En référence à un second mode d'expression de l'efficacité, l'invention permet d'atteindre une vitesse moyenne d'au moins environ 300 µmoles d'impureté-modèle par heure, par watt de puissance de la source et par mètre carré de surface d'élément de support illuminé par la source. De préférence cette vitesse est d'au moins environ 500 µmoles d'impureté-modèle, et peut couramment atteindre jusqu'à environ 3000 µmoles d'impureté-modèle par heure, par watt de puissance de la source et par mètre carré de surface d'élément de support illuminé par la source. Des vitesses (calculées à 90% d'oxydation) encore beaucoup plus élevées, allant d'environ 4.000 à plus de 20.000 µmoles d'impureté par heure, par watt de puissance de la source et par mètre carré de surface d'élément de support illuminé par la source sont couramment accessibles pour des composés organiques tels que l'ammoniac, l'isopropanol ou l'éthylamine.

En référence à un troisième mode d'expression de l'efficacité, l'invention permet d'atteindre une vitesse moyenne d'au moins environ 100 µmoles d'impureté-modèle par heure, par watt de puissance de la source et par gramme de catalyseur. De préférence cette vitesse est d'au moins environ 200 µmoles d'impureté-modèle, et peut couramment atteindre jusqu'à environ 2.500 µmoles d'impureté-modèle par heure, par watt de puissance de la source et par gramme de catalyseur. Des vitesses moyennes d'oxydation photocatalytique (calculées à 90% d'oxydation) encore beaucoup plus élevées, allant d'environ 1.500 à environ 4.000 µmoles d'impureté par heure, par watt de puissance de la source et par gramme de catalyseur sont accessibles pour des composés organiques tels que l'ammoniac, l'isopropanol ou l'éthylamine.

En référence à un quatrième mode d'expression de l'efficacité, l'invention permet d'atteindre une vitesse moyenne d'au moins environ 2 µmoles d'impureté-modèle par heure et par watt de puissance de la source. De préférence cette vitesse est d'au moins environ 10 µmoles d'impureté-modèle, et peut couramment atteindre jusqu'à environ 70 µmoles d'impureté-modèle par heure et par watt de puissance de la source. Des vitesses (calculées à 90% d'oxydation) dans une gamme d'environ 50 à environ 400 µmoles d'impureté par heure et par watt de puissance de la source sont couramment accessibles pour des composés organiques tels que l'ammoniac, l'isopropanol ou l'éthylamine.

Le gaz traité dans le procédé selon l'invention peut être tout effluent gazeux chargé en contaminants et impuretés dont on désire se débarrasser, pour autant que cet effluent contienne une proportion d'oxygène suffisante pour permettre à la photo-oxydation catalytique de se produire. Un effluent gazeux préféré pour la mise en oeuvre de l'invention est constitué principalement d'air. Dans la plupart des cas, il s'agit d'air pollué par des contaminants gazeux ou hautement volatils. Toutefois il peut s'agir aussi de gaz industriels autres que l'air contenant, à une étape spécifique d'un processus industriel, des impuretés indésirables. Si nécessaire, on peut injecter dans l'effluent gazeux à traiter une quantité appropriée d'oxygène ou d'une autre espèce oxydante telle que l'ozone. Comme exemples non limitatifs de contaminants éliminables grâce au procédé selon l'invention, on peut citer toutes sortes de composés organiques volatils tels que des hydrocarbures aliphatiques saturés (tels que méthane, propane, hexane, octane, etc.) et insaturés (tels que le butadiène-1,3) et des hydrocarbures aromatiques (tels que benzène, toluène, xylènes) légers (c'est-à-dire ayant jusqu'à 8 atomes de carbone environ), des hydrocarbures halogénés (tels que par exemple le trichloréthylène), des hydrocarbures oxygénés (en particulier des alcools tels que méthanol, éthanol, isopropanol, butanol ; des cétones telles que l'acétone et l'hexanone; des aldéhydes tels que formaldéhyde, acétaldéhyde, propionaldéhyde et butyraldéhyde ; des éthers tels que le diéthylether; des phénols et phénols chlorés), des amines (telles que triméthylamine, éthylamine et pyridine), des dioxines, des triazines, des biphényles polychlorés, des cyanures, des hydrocarbures soufrés (tels que le méthylmercaptan), ainsi que des composés non organiques tels que l'ammoniac, le sulfure d'hydrogène, le monoxyde de carbone, des composés nitrés (oxydes d'azote), des sulfites, etc. et des mélanges de tels composés en toutes proportions.

Le procédé selon l'invention est applicable à l'épuration de contaminants en des concentrations très variables par rapport à l'effluent gazeux à épurer. Par exemple ces concentrations varient dans une gamme allant d'environ 0,001 à environ 100.000 ppmv (parties par million en volume), de préférence de 0,01 à 20.000 ppmv, et encore plus préférentiellement de 0,5 à 5.000 ppmv environ. Par ailleurs, le procédé selon l'invention est applicable dans une large gamme de températures (par exemple entre 0° et 70°C environ, de préférence entre 15° et 50°C) et de pressions. La température optimale de mise en oeuvre du procédé dépend aussi de la concentration saturante en contaminant dans l'effluent gazeux à traiter, la relation entre ces deux paramètres étant bien connue de l'homme de l'art. Comme il va de soi, le procédé selon l'invention est de préférence mis en oeuvre à température ambiante et sous pression atmosphérique. La température maximale d'exécution du procédé dépendra le plus souvent de la température optimale de fonctionnement de la source de rayonnement ultraviolet ou visible choisie.

Le procédé selon l'invention présente de nombreux avantages (rapidité d'épuration, efficacité très satisfaisante même en présence de catalyseurs ordinaires et peu coûteux, dispositif compact, modulaire et de fabrication simple, adaptation à des contaminants variés) qui le rendent particulièrement adapté au traitement de l'air dans de nombreux milieux tels que les habitations, les véhicules de transport individuel sur route (automobiles, camions) ou collectif sur rail (trains, métropolitains, tramways) et dans les airs (avions), les élevages d'animaux, les zones d'entreposage, les armoires frigorifiques domestiques et industrielles, ainsi qu'au traitement des effluents gazeux de réacteurs chimiques ou biologiques. Il est en outre parfaitement compatible avec d'autres procédés de traitement de l'air, tels que le conditionnement (par chauffage ou refroidissement) de l'air, avec lesquels il peut être combiné dans un seul et même dispositif.

La présente invention est maintenant illustrée au moyen des exemples non limitatifs suivants.

### Exemple 1 - préparation du support photocatalytique.

5 g de dioxyde de titane (disponible commercialement sous la référence P25 auprès de la société Degussa, et comprenant environ 20% de rutile et 80% d'anatase) ou, comme précisé dans chaque exemple ci-après, d'un autre catalyseur de photooxydation à base d'oxyde(s) semi-conducteur(s), est mis en suspension dans 500 ml d'alcool à l'aide d'un bain à ultrasons de marque Bransonic d'une puissance de 130W pour un contenant de 5,5 litres. La suspension obtenue, stable sur une période de plusieurs semaines, est ensuite utilisée pour le revêtement d'éléments de support de catalyseur de nature et de nombre divers, par exemple en aluminium ou en papier. Ces éléments peuvent être des ailettes longitudinales selon l'art antérieur (exemple 8) ou bien des rondelles selon l'invention (autres exemples). Le revêtement s'effectue en trempant rapidement l'élément de support, sous ultrasons, dans la suspension de catalyseur puis en le séchant à une température d'environ 70°C. Le cycle de trempage et séchage est répété jusqu'à obtention de la masse de catalyseur désirée.

### Exemple 2 - premier mode de réalisation du dispositif selon l'invention

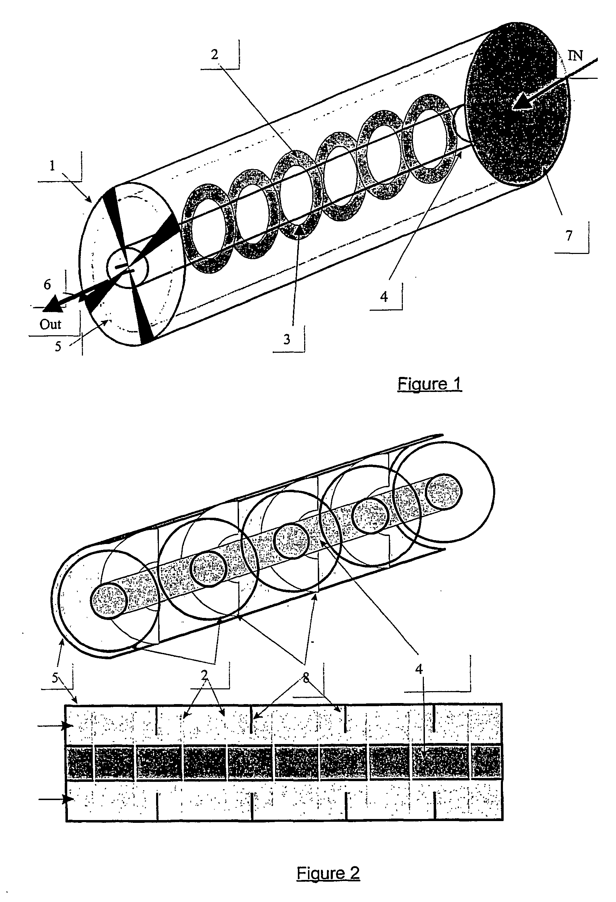

Ce premier mode de réalisation est décrit par référence à la représentation en perspective de la figure 1. Des rondelles (2) de 35 mm de diamètre extérieur comportant une ouverture circulaire (3) de 15 mm de diamètre en leur centre sont d'abord obtenues par découpe soit de feuilles d'aluminium d'épaisseur 100 µm dégraissées au méthanol, soit de filtres en papier (Whatman n°5) puis revêtues de catalyseur conformément à la méthode de l'exemple 1.

Un réacteur cylindrique (1) en verre de 25 cm de long et 4 cm de diamètre intérieur est muni de rondelles (2) - dont six sont représentées sur la figure 1 ― jouant le rôle de supports catalytiques, placées le long d'une source (4) constituée d'un tube fluorescent (UV A Cleo 15 watts, commercialisée par Philips) de 15 mm de diamètre et espacées l'une de l'autre d'environ 12 mm. Un réflecteur (5) peut être installé contre la paroi interne du réacteur (1). Un ventilateur (6) et un filtre (7) sont placés aux extrémités du réacteur (1).

### Exemple 3 - second mode de réalisation du dispositif selon l'invention.

Ce second mode de réalisation est décrit par référence à la figure 2 qui en fournit une représentation en perspective (vue du haut) et une coupe longitudinale (vue du bas). Il comprend, outre les éléments déjà présents sur la figure 1 repérés par les mêmes numéros et de mêmes dimensions qu'à l'exemple 2, des chicanes (8) formées de rondelles de 4 cm de diamètre extérieur pour une ouverture interne de 2 cm de diamètre. Ces chicanes (moyens d'obstruction) sont insérées toutes les deux rondelles (2) et en contact direct avec la paroi du réacteur (1). Un ventilateur (6) et un filtre (7) (non représentés sur la figure 2) peuvent être placés aux extrémités du réacteur (1) comme à l'exemple 2.

### Exemple 4 (comparatif) - dispositif selon l'art antérieur.

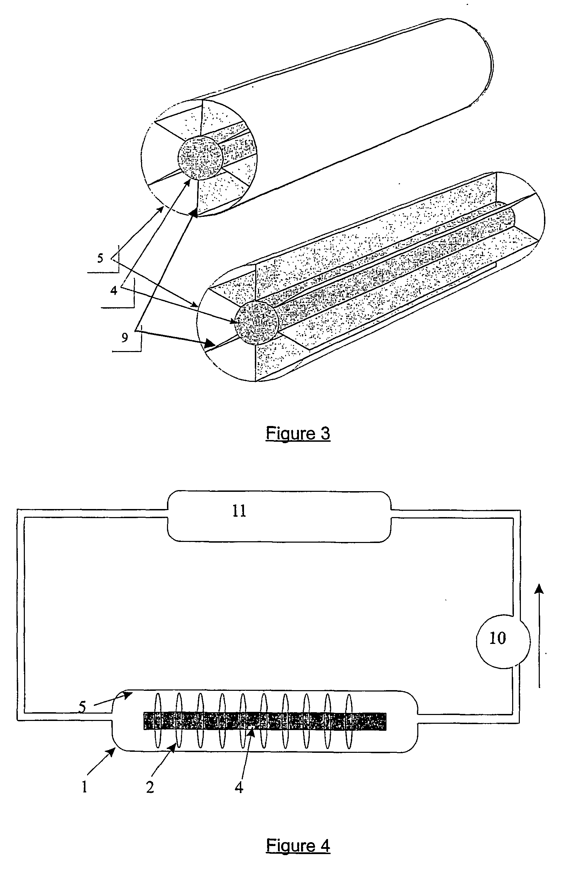

Un réacteur de même dimensions extérieures que celui des exemples 2 et 3 et conforme au brevet U.S. n° 5.790.934 est décrit par référence à la figure 3 qui en fournit une représentation en perspective avec coupe transversale (vue du haut) et une représentation en perspective ouverte (vue du bas). Comprenant les éléments déjà présents sur la figure 1 et repérés par les mêmes numéros, il est obtenu en remplaçant les rondelles (2) par six ailettes (9) longitudinales, équidistantes (c'est-à-dire faisant entre elles un angle de 60 degrés), disposées de manière radiale par rapport au tube (4) et occupant tout l'espace entre le tube (4) et le réflecteur (5) appliqué contre la face interne du réacteur (1). Un ventilateur (6) et un filtre (7) (non représentés sur la figure 3) peuvent être placés aux extrémités du réacteur (1), comme à l'exemple 2.

### Exemple 5 - épuration de l'acétone - comparaison avec l'art antérieur

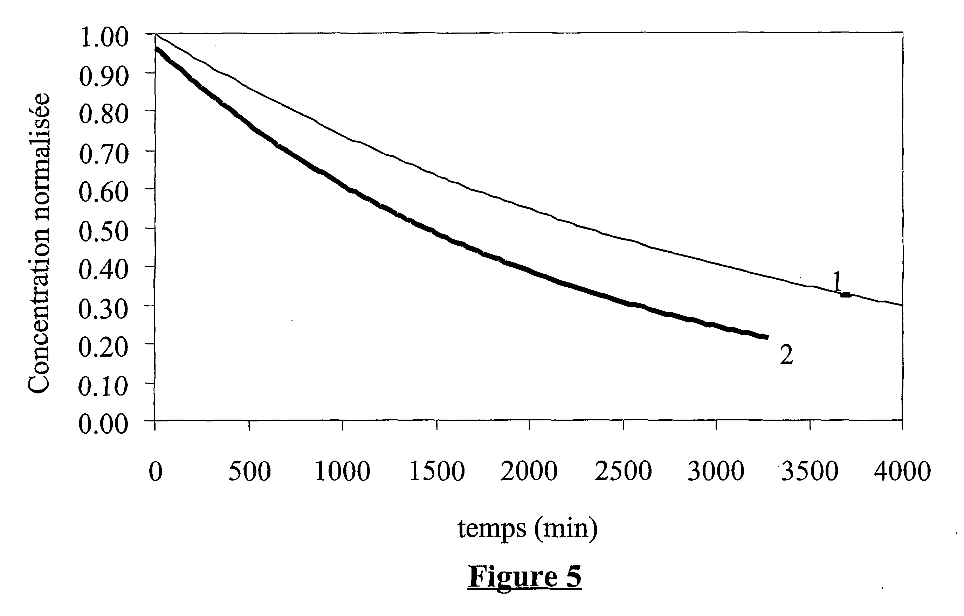

L'efficacité de la présente invention pour l'épuration de l'acétone est comparée à celle de la technique divulguée dans la demande de brevet WO 99/24277. A cet effet on réalise un montage expérimental en circuit fermé, représenté à la figure 4, similaire à celui de la figure 1 dudit document antérieur et comprenant un dispositif analogue au mode de réalisation de l'exemple 2. Pour cette raison, les numéros de repère sur la figure 4 désignent les mêmes éléments que sur la figure 1, à savoir le réacteur (1), les rondelles (2), la source fluorescente (4) et le réflecteur (5). Ce dispositif est en circuit avec une pompe (10) et une ampoule à gaz (11). L'acétone est injectée dans l'ampoule (11) où elle est vaporisée avant d'être mise en présence du catalyseur. Le débit de circulation du gaz est d'environ 0,5 litre par minute. Dans ce montage, on utilise 10 rondelles de papier filtre (Whatman n°5) revêtues de catalyseur conformément à la méthode de l'exemple 1. Toutefois le catalyseur utilisé n'est pas le dioxyde de titane P25 mais un TiO₂ sol-gel préparé de la façon suivante : à 9 ml de tétraéthoxyde de titane Ti(OC₂H₅)₄ de la firme Aldrich on ajoute progressivement, dans un récipient en verre et sous agitation magnétique, 11 ml d'alcool puis 12,5 ml d'eau. L'agitation est maintenue durant une heure après laquelle le produit est mûri à 70°C pendant 17 heures. Ensuite, une calcination à 400°C pendant 2 heures permet d'obtenir 3 grammes de poudre d'anatase qui, avant sa mise sur support, est légèrement broyée.

Comme dans le mode opératoire du document antérieur :
- la concentration initiale en acétone est égale à environ 77.000 ppmv (parties par million en volume).
- le système est d'abord stabilisé pendant 10 heures avec la source UV éteinte, ce qui permet d'observer (voir tableau 1 ci-après) une forte absorption de l'acétone sur le catalyseur et les diverses surfaces internes du dispositif avant réaction.

Lorsque le système est équilibré, la source est allumée et des prises d'échantillons sont effectuées à intervalles réguliers et analysées par chromatographie en phase gazeuse couplée à un spectromètre de masse pour suivre l'évolution de l'élimination de l'acétone et la production de sous-produits en traces (acétaldéhyde et formaldéhyde) et des produits de minéralisation (CO₂ et H₂O).

Les conditions opératoires ainsi que les résultats obtenus décrits dans le document antérieur (pages 13 à 22, figure 15B pour l'anatase, figure 17A pour l'aérogel) d'une part et observés dans le présent exemple d'autre part sont résumés dans le tableau 1 ci-après. A partir de l'instant où commence l'oxydation photocatalytique sous l'action du rayonnement ultraviolet (t = 10 heures), on observe que le temps nécessaire à la disparition de 90% de l'acétone est de 90 minutes selon l'invention et de 15 heures en employant l'aérogel de la demande de brevet WO 99/24277, tandis que seulement environ 85% de l'acétone a disparu après 30 heures en employant l'anatase du même document antérieur. Compte tenu de la quantité de catalyseur et de la puissance d'illumination mises en jeu, la vitesse d'oxydation permise par l'exemple selon l'invention est toujours, quelque soit le mode d'expression de cette vitesse, au moins 17 fois supérieure à celle démontrée par l'état de la technique.

**Tableau 1**

| | WO 99/24277 | WO 99/24277 | Exemple 5 |
|---|---|---|---|
| Type de dioxyde de titane | anatase | aérogel | anatase (sol-gel) |
| Masse (g) de catalyseur | 3.4 | 1.33 | 0.060 |
| Surface spécifique (m²/g) du catalyseur | 80 | 423 | 150 |
| Surface illuminée (cm²) | 48,5 | 26,6 | 157 |
| Puissance source UV (W) | 300 | 300 | 15 |
| Volume du système (ml) | 300 | 300 | 600 |
| Volume initial acétoneₗᵢ (ml) | 0.075 | 0.075 | 0.140 |

| | | | |
|---|---|---|---|
| Concentrations d'acétone (µmoles/l) | | | |
| - initiale | 3000 | 3000 | 3200 |
| - après 10 heures | 2400 | 240 | 320 |
| - après 11,5 heures | 2130 | 216 | 32 |
| - après 25 heures | 780 | 24 | n.d. |
| - après 40 heures | 350 | 10 | n.d. |

| | | | |
|---|---|---|---|
| Vitesse à 90% d'oxydation | | | |
| - en µmole/h/W/g | 0,067 (*) | 0,036 | 213 |
| - en µmole/h/W/m² | 47 (*) | 18 | 815 |
| - en µmole/h/W/g/m² | 13,8 (*) | 13,6 | 13600 |
| - en µmole.cm²/h/W/g | 3,3 (*) | 0,96 | 33500 |
| - en µmole/h/W | 0,228 (*) | 0,048 | 12,8 |

| | | | |
|---|---|---|---|
| n.d. : non détectable | | | |
| (*) vitesse à 85% d'oxydation après 30 h d'illumination | | | |

### Exemple 6 ― comparaison du fonctionnement d'un réacteur avec et sans réflecteur optique interne.

Deux configurations A et B d'un réacteur conforme au premier mode de réalisation de l'invention (exemple 2, figure 1) sont évaluées dans une enceinte parallélépipédique de dimensions 1m x 1m x 0.6m fermée hermétiquement, garnie de feuilles de polyfluorure de vinyle Tedlar afin de limiter l'adsorption sur les parois, et dont le volume interne libre est de 450 litres. Dans chaque variante, le réacteur est muni de 15 rondelles en aluminium recouvertes de TiO₂ (18 mg au total) conformément à l'exemple 1 et espacées de 1,5 cm environ. Dans la configuration A, le réacteur (1) ne comporte pas de réflecteur. Dans la configuration B, le réacteur (1) comporte un réflecteur (5) en aluminium de 100 µm d'épaisseur placé contre sa paroi interne. Chaque configuration de réacteur est placée à tour de rôle dans l'enceinte fermée de 450 litres et connectée à un premier ventilateur permettant de recycler plusieurs fois l'air de l'enceinte à travers la zone de photocatalyse. 0.65 g d'acétone (correspondant à une concentration initiale de 555 ppmv) est versée dans l'enceinte et homogénéisée au moyen d'un second ventilateur. La source (4) est allumée lorsque la concentration d'acétone dans l'enceinte est stabilisée, soit environ 15 minutes après l'introduction de l'acétone. La vitesse linéaire moyenne de l'air dans le réacteur est de 1,1 m/s, soit un temps moyen de résidence de 0.22 s. Compte tenu d'une viscosité dynamique de 0,000018 Pa.s et d'une masse volumique de l'air de 1,2 kg/m³, il est aisé de calculer que l'indice de turbulence, défini par la formule I_{T} = Re* x N /(β x f), des configurations A et B du réacteur est égal à 96.775 (à cet effet, on vérifiera d'abord que Re* = 2.719, β = 0,27 et f = 1,55).

L'évolution du système est suivie au moyen d'un chromatographe en phase gazeuse Quad de la société Agilent travaillant simultanément sur trois colonnes (une colonne OV1 pour suivre l'acétone, un tamis moléculaire à 5 angstroms pour suivre l'oxygène et une colonne PPQ pour la détection du gaz carbonique) et la concentration normalisée en acétone est représentée sur la figure 5. On observe ainsi que 50% de l'acétone a disparu après 1400 minutes pour le réacteur avec réflecteur (courbe 2) et après 2250 minutes seulement pour le réacteur sans réflecteur (courbe 1). Le tableau 2 ci-après indique, selon différents modes d'expression, la vitesse de disparition de l'acétone à l'origine d'une part et après 50% d'oxydation d'autre part, exprimée en conditions standard.

**Tableau 2**

| Configuration | A | B |
|---|---|---|
| Vitesse initiale | | |
| - en µmole/h/W/g | 765 | 3440 |
| - en µmole/h/W/m² | 585 | 2630 |
| - en µmole.m²/h/W/g | 18 | 81 |
| - en µmole/h/W | 14 | 62 |

| Vitesse à 50% d'oxydation | | |
|---|---|---|
| - en µmole/h/W/g | 550 | 890 |
| - en µmole/h/W/m² | 420 | 680 |
| - en µmole.m²/h/W/g | 13 | 21 |
| - en µmole/h/W | 10 | 16 |

### Exemple 7 - abattement de l'acétone dans une enceinte fermée - influence du temps de résidence.

Dans la même enceinte de 450 litres qu'à l'exemple 6 mais en utilisant 2,7 g d'acétone (donc une concentration initiale de 2.300 ppmv), on place un réacteur de configuration similaire à celle du premier mode de réalisation de l'invention (exemple 2, figure 1) mais de dimensions différentes. Ce réacteur tubulaire en aluminium, dont la face intérieure présente une bonne réflectivité à la lumière, a un diamètre intérieur de 13 cm et une longueur de 90 cm. Deux tubes fluorescents de 20 W chacun sont positionnés axialement l'un derrière l'autre. 20 rondelles en papier de 11 cm de diamètre extérieur, percées en leur milieu à la dimension (26 mm) des tubes fluorescents et espacées de 4,5 cm, sont revêtues de TiO₂ conformément à la méthode de l'exemple 1 et supportent un poids total de catalyseur de 1.3 g. La vitesse moyenne des gaz est de 1.5 m/s, soit un temps moyen de résidence de 0.6 s. Dans ces conditions, il est aisé de calculer que l'indice de turbulence, défini par la formule I_{T} = Re* x N /(β x f), de cette configuration du réacteur est égal à 474.758 (à cet effet, on vérifiera d'abord que Re* = 12.737, β = 0,3 et f = 1,81).

Pour mémoire, la minéralisation totale de l'acétone correspond à l'équation suivante :

CH₃COCH₃ + 4O₂ → 3CO₂ + 3H₂O

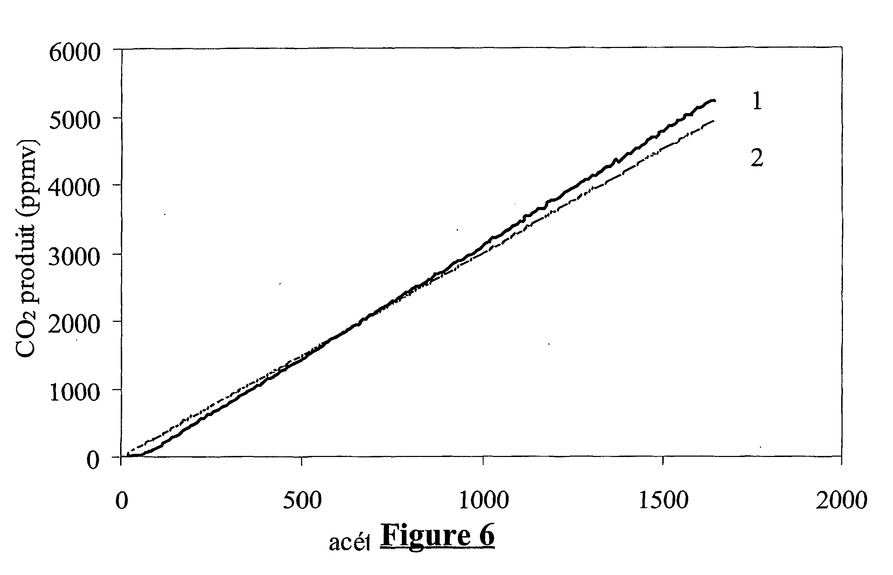

La figure 6 présente l'évolution expérimentale (courbe 1) de CO₂ produit (exprimé en ppmv) en fonction de l'acétone consommée (également exprimée en ppmv), par rapport à l'évolution théorique (courbe 2) résultant de cette équation et montre donc une minéralisation totale de l'acétone. La production de CO₂ légèrement supérieure à la valeur théorique en fin d'expérience s'explique par la présence de rondelles en papier qui se dégradent légèrement au contact avec TiO₂. Cet exemple illustre que la minéralisation complète de l'acétone est possible avec un temps de résidence suffisamment important dans le réacteur.

### Exemple 8 (comparatif) - épuration de l'acétone selon l'art antérieur

On utilise un réacteur conforme à l'exemple 4, possédant six ailettes ayant chacune une longueur de 25 cm (c'est-à-dire la longueur totale du réacteur) et une largeur de 1,25 cm, dont toute la surface interne (surface active exposée au rayonnement : 765 cm²) est couverte de dioxyde de titane (quantité totale : 100 mg) et équipé d'un ventilateur. Ce réacteur est placé dans l'enceinte de 450 litres de l'exemple 6 et mis en fonctionnement dans les conditions suivantes :
- quantité d'acétone : 2,6 g (concentration initiale de 2.220 ppmv)
- vitesse du gaz : 1,2 m/s.

Dans ces conditions, il est aisé de calculer que l'indice de turbulence, défini par la formule I_{T} = Re* x N /(β x f), de cette configuration du réacteur est égal à 1.588 (à cet effet, on vérifiera d'abord que Re* = 2.966 et f = 1,87 et on considère que N = 1 et β = 1, c'est-à-dire les ailettes n'induisent pas une réduction significative de la surface perpendiculaire à l'écoulement).

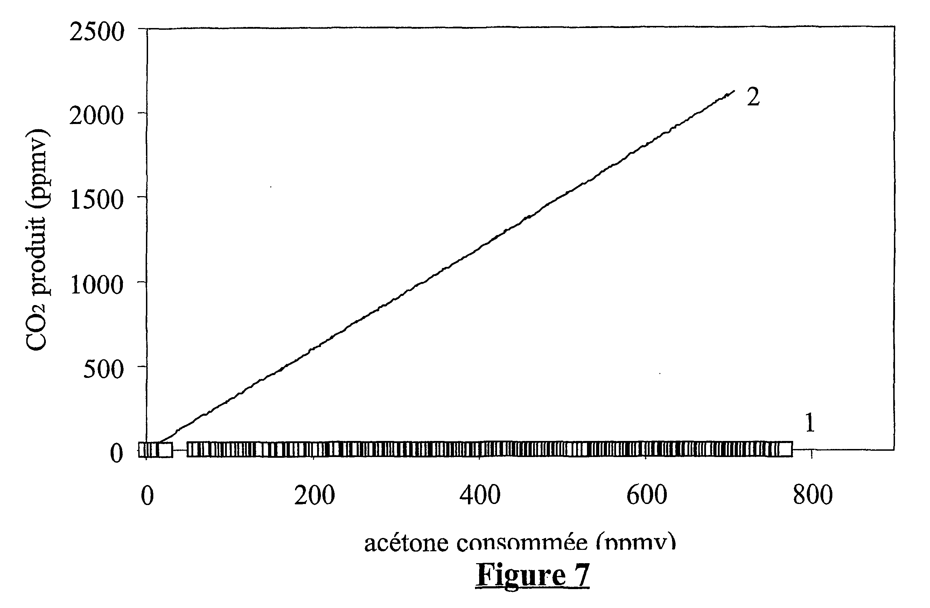

La figure 7 présente l'évolution expérimentale (courbe 1) de CO₂ produit (exprimé en ppmv) en fonction de l'acétone consommée (aussi exprimée en ppmv), par rapport à la production théorique (courbe 2) correspondant à une minéralisation complète selon l'équation précitée. Il montre donc que, contrairement au dispositif selon l'invention (exemple 7), le réacteur à ailettes est totalement inactif vis-à-vis de la minéralisation de l'acétone. Selon toute vraisemblance, l'acétone est alors simplement dégradée en formaldéhyde et acétaldéhyde ou bien reste fixée sur le catalyseur.

### Exemple 9 - influence de photocatalyseur sur la surface réfléchissante.

Un réacteur conforme à la configuration B de l'exemple 6 est étudié dans les conditions de cet exemple (0.65 g d'acétone dans 450 litres d'air, soit une concentration initiale de 555 ppmv), le temps de résidence moyen du gaz dans le réacteur étant de 0,18 s. A la différence de l'exemple 6 toutefois, le réflecteur de ce réacteur a été recouvert d'une très fine couche de TiO₂, correspondant à 3 mg pour 315 cm² de réflecteur.

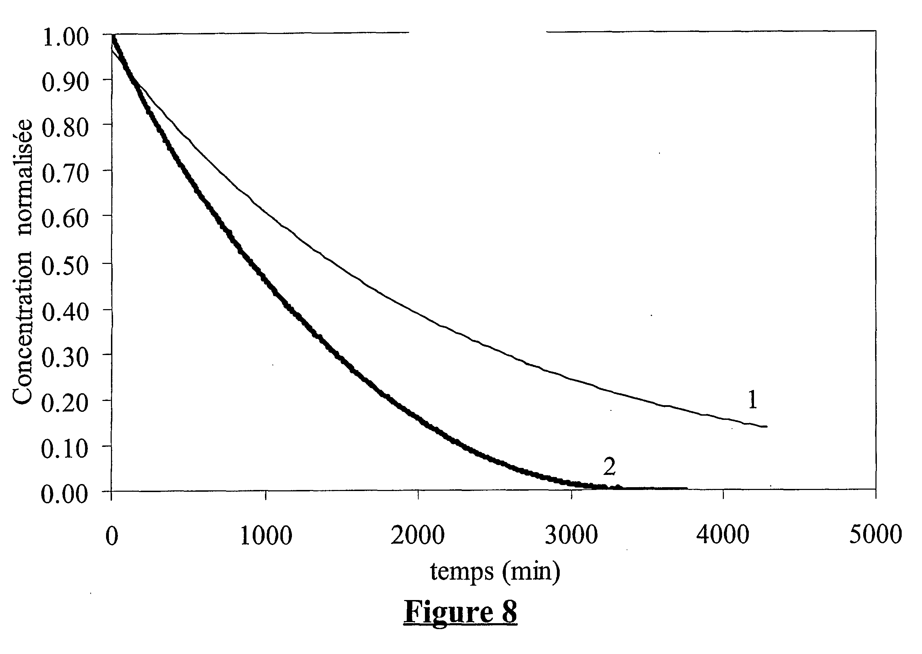

La figure 8 présente l'évolution de la dégradation de l'acétone (exprimée en concentration normalisée, c'est-à-dire en concentration relative par rapport à la concentration initiale) en fonction du temps pour le réflecteur non revêtu de catalyseur (courbe 1 déjà présentée sur la figure 5) par comparaison au réflecteur revêtu de catalyseur (courbe 2). On constate une amélioration spectaculaire de la performance du réacteur puisqu'une élimination totale de l'acétone est obtenue après 3200 minutes et qu'une élimination de 80% de l'acétone est obtenue après 1800 minutes en présence de catalyseur sur le réflecteur (au lieu de 3400 minutes en l'absence de catalyseur sur le réflecteur). Par ailleurs, aucune trace de produit intermédiaire n'est décelable dans la phase gazeuse lorsque tout l'acétone est consommée, indiquant une parfaite minéralisation de ce composé.

Le tableau 3 ci-après indique, selon les différents modes d'expression déjà précédemment utilisés, la vitesse de disparition de l'acétone à l'origine d'une part et après 80% d'oxydation d'autre part, exprimée en conditions standard.

Ces résultats montrent que le réflecteur revêtu d'une très fine couche de catalyseur permettant des reflexions multiples pour chaque rayon accroît la surface active exposée au rayonnement et induit une exploitation quasi-totale du rayonnement lumineux, optimisant ainsi l'utilisation de l'énergie lumineuse émise par le tube fluorescent ainsi que l'excitation du photocatalyseur.

**Tableau 3**

| Réflecteur | Non revêtu | Revêtu |
|---|---|---|
| Vitesse initiale | | |
| - en µmole/h/W/g | 3440 | 1970 |
| - en µmole/h/W/m² | 2630 | 750 |
| - en µmole.m²/h/W/g | 81 | 108 |
| - en µmole/h/W | 62 | 41 |

| Vitesse à 80% d'oxydation | | |
|---|---|---|
| - en µmole/h/W/g | 590 | 950 |
| - en µmole/h/W/m² | 450 | 845 |
| - en µmole.m²/h/W/g | 14 | 22 |
| - en µmole/h/W | 10,6 | 20 |

### Exemple 10 - influence de la présence de restrictions complémentaires dans le réacteur pour la dégradation de l'acétone.

Un réacteur conforme au second mode de réalisation de l'invention (exemple 3, figure 2), possèdant 15 rondelles revêtues de 18 mg de TiO_{2,} est installé dans l'enceinte de 450 litres de l'exemple 6 et mis en fonctionnement avec une quantité d'acétone de 0,66 g et un temps moyen de séjour de 0,62 s. Les parois et les chicanes de ce réacteur sont réalisées en matière réflective mais ne sont pas recouvertes de TiO₂.

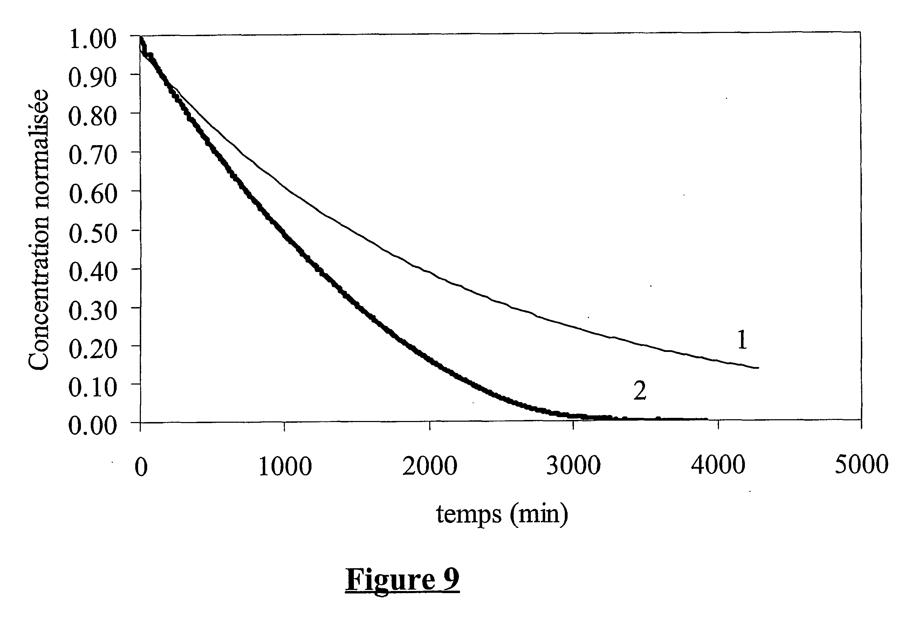

La figure 9 présente l'évolution de la dégradation de l'acétone (exprimée en concentration normalisée) en fonction du temps (courbe 2), comparée à celle de l'exemple 6 (courbe 1). La performance du réacteur est spectaculairement améliorée puisqu'une élimination totale de l'acétone est obtenue après 3300 minutes et qu'une élimination de 80% de l'acétone est obtenue après 1850 minutes seulement en présence de chicanes (au lieu de 3400 minutes en l'absence de chicanes). Le tableau 4 ci-après indique, selon différents modes d'expression, la vitesse de disparition de l'acétone à l'origine d'une part et après 80% d'oxydation (sans chicanes) ou bien 90% d'oxydation (avec chicanes) d'autre part, exprimée en conditions standard.

**Tableau 4**

| Configuration | avec chicanes | sans chicanes |
|---|---|---|
| Vitesse initiale | | |
| - en µmole/h/W/g | 1530 | 3440 |
| - en µmole/h/W/m² | 1170 | 2630 |
| - en µmole.m²/h/W/g | 36 | 81 |
| - en µmole/h/W | 28 | 62 |

| Vitesse à 90% d'oxydation | | |
|---|---|---|
| - en µmole/h/W/g | 1000 | 600 (*) |
| - en µmole/h/W/m² | 765 | 457 (*) |
| - en µmole.m²/h/W/g | 24 | 14 (*) |
| - en µmole/h/W | 18 | 11 (*) |

| | | |
|---|---|---|
| (*) vitesse à 80% d'oxydation après 3400 minutes d'illumination. | | |

### Exemples 11 et 12 - dégradation d'ammoniac

On effectue la dégradation photocatalytique d'ammoniac (en tant que polluant de l'air) dans un réacteur conforme au premier mode de réalisation de l'invention (exemple 2, figure 1) et en utilisant le montage de la figure 4 (c'est-à-dire un volume de 0,6l). Le nombre N de rondelles, la quantité initiale de polluant (exprimée en µmoles) et la masse totale du catalyseur déposé sur les rondelles (exprimée en mg) sont mentionnés au tableau 5 ci-après. Le même tableau indique les résultats de ces expériences, à savoir la durée t (exprimée en minutes) après laquelle la quantité de polluant a été réduite de 90% dans les conditions standard, à partir de laquelle on calcule les différents modes d'expression de la vitesse avec laquelle 90% du polluant a été dégradé. Le catalyseur utilisé dans l'exemple 11 est le dioxyde de titane P25 de l'exemple 1. Le catalyseur utilisé dans l'exemple 12 est le TiO₂ sol-gel de l'exemple 5. Ces exemples montrent que l'ammoniac peut être épuré de l'air en employant de très faibles quantités de catalyseur et avec des vitesses très supérieures à celles observées pour l'acétone.

### Exemples 13 et 14 - dégradation d'isopropanol

On effectue la dégradation photocatalytique de l'isopropanol (en tant que polluant de l'air) dans un réacteur conforme au premier mode de réalisation de l'invention (exemple 2, figure 1) et en utilisant le montage de la figure 4, le catalyseur utilisé étant le dioxyde de titane P25 de l'exemple 1, en faisant varier le nombre N de rondelles et la masse catalytique. Les résultats de ces expériences sont indiqués au tableau 5 ci-après et montrent que l'isopropanol peut être épuré de l'air en employant de très faibles quantités de catalyseur et avec des vitesses très supérieures à celles observées pour l'acétone.

### Exemples 15 et 16 ― dégradation d'éthylamine sous l'effet de rayonnement visible

On effectue la dégradation photocatalytique de l'éthylamine (en tant que polluant de l'air) dans un réacteur conforme au premier mode de réalisation de l'invention (exemple 2, figure 1) et en utilisant le montage de la figure 4, à l'exception du fait que le tube fluorescent UV est remplacé par une source de puissance 8 watts émettant la lumière visible et commercialisée par la société Sylvania sous la référence 133. Le catalyseur utilisé dans l'exemple 15 est le dioxyde de titane P25 de l'exemple 1. Le catalyseur utilisé dans l'exemple 16 est le TiO₂ sol-gel de l'exemple 5. Les résultats de ces expériences sont indiqués au tableau 5 ci-après et montrent que l'éthylamine peut être épurée de l'air sous l'effet de rayonnement visible en employant de très faibles quantités de catalyseur et avec des vitesses très supérieures à celles observées pour l'acétone.

**Tableau 5**

| Exemple | 11 | 12 | 13 | 14 | 15 | 16 |
|---|---|---|---|---|---|---|
| Polluant (µmole) | 2230 | 705 | 1290 | 1290 | 1770 | 885 |
| N rondelles | 10 | 10 | 6 | 12 | 10 | 10 |
| Catalyseur (mg) | 133 | 50 | 12 | 60 | 60 | 65 |
| t_{90%} (minutes) | 25 | 20 | 100 | 35 | 120 | 30 |

| Vitesse (90%) | | | | | | |
|---|---|---|---|---|---|---|
| - µmoles/h/W/g | 2415 | 2538 | 3870 | 2210 | 1660 | 3060 |
| - µmoles/h/W/m² | 20070 | 7930 | 4840 | 6910 | 6220 | 12400 |
| - µmoles/h/W/g/m² | 150900 | 158600 | 403000 | 115000 | 103700 | 191500 |
| - µmoles.m²/h/W/g | 39 | 41 | 37 | 42 | 27 | 49 |
| - µmoles/h/W | 357 | 141 | 52 | 148 | 111 | 221 |

### Exemples 17 à 20 ― dégradation d'acétone en forte concentration

On effectue la dégradation photocatalytique de 1380 µmoles d'acétone en tant que polluant de l'air dans un réacteur conforme au premier mode de réalisation de l'invention (exemple 2, figure 1) et en utilisant le montage de la figure 4 (c'est-à-dire un volume de 0,6 litre, donc une concentration initiale d'acétone de 50.000 ppmv), le catalyseur utilisé étant le dioxyde de titane P25 de l'exemple 1 (pour les exemples 17 et 18) ou bien le TiO₂ sol-gel de l'exemple 5 (pour les exemples 19 et 20) , en faisant varier le nombre N de rondelles et la masse catalytique. Les résultats de ces expériences sont indiqués au tableau 6 ci-après.

### Exemples 21 et 22 - dégradation d'acétone en concentration modérée

On effectue la dégradation photocatalytique de 11190 µmoles d'acétone en tant que polluant de l'air dans un réacteur conforme au premier mode de réalisation de l'invention (exemple 2, figure 1), comportant 15 rondelles (supportant 18 mg de catalyseur au total) et un réflecteur recouvert de catalyseur, procurant une surface exposée à la lumière de 550 cm². Ce réacteur est placé dans l'enceinte de 450 litres de l'exemple 6 (donc la concentration initiale d'acétone est de 555 ppmv), le catalyseur utilisé étant le dioxyde de titane P25 de l'exemple 1. La quantité de catalyseur recouvrant le réflecteur est de 3 mg dans l'exemple 21 et de 250 mg dans l'exemple 22. Les résultats de ces expériences sont indiqués au tableau 6 ci-après.

**Tableau 6**

| | | | | | | |
|---|---|---|---|---|---|---|
| Exemple | 17 | 18 | 19 | 20 | 21 | 22 |
| N rondelles | 6 | 11 | 6 | 18 | 15 | 15 |
| Catalyseur (mg) | 17 | 60 | 12 | 108 | 21 | 268 |
| t_{90%} (minutes) | 250 | 110 | 200 | 80 | 2300 | 1250 |
| Vitesse (90%) | | | | | | |
| - µmoles/h/W/g | 1170 | 750 | 2070 | 575 | 835 | 120 |
| - µmoles/h/W/m² | 2070 | 2560 | 2590 | 2150 | 318 | 585 |
| - µmoles/h/W/g/m² | 121700 | 42700 | 215600 | 20000 | 15200 | 2200 |
| - µmoles.m²/h/W/g | 11,2 | 13,2 | 20 | 16,6 | 46 | 6,6 |
| - µmoles/h/W | 22 | 50 | 28 | 69 | 19 | 36 |

### Exemple 23 - réacteur à paroi interne réfléchissante recouverte de catalyseur.

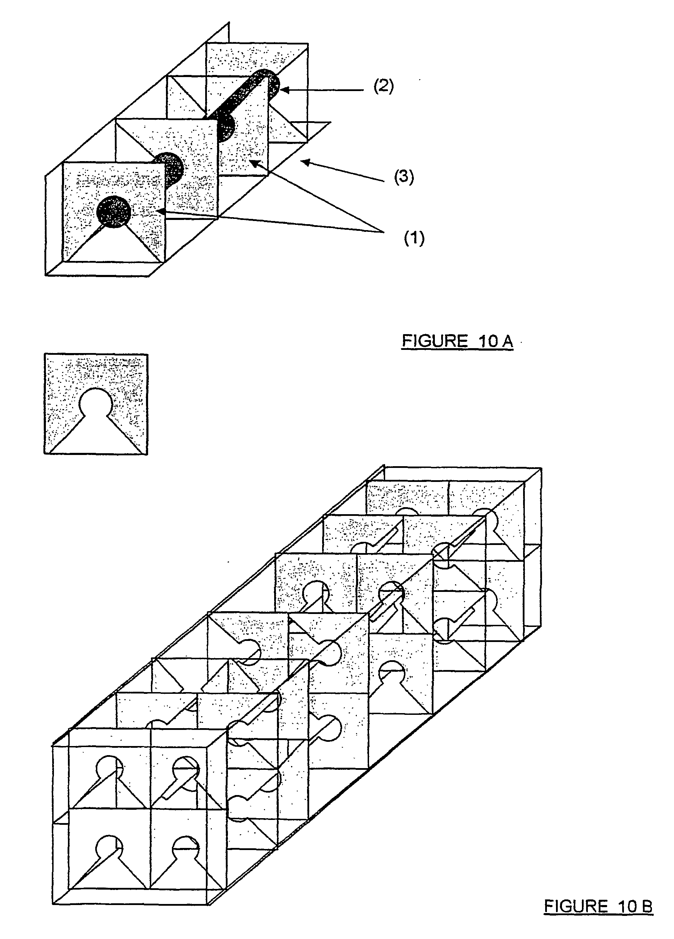

Le réacteur est composé de l'association (représentée sur la figure 10B, à l'exception des lampes UVA) de quatre modules (chacun conforme à la représentation de la figure 10A) insérés dans un tube parallélépipédique muni d'un ventilateur à l'une de ses extrémités. Chaque module comporte 16 restrictions (dont quatre seulement sont représentées sur la figure), chaque restriction (1) faisant avec la restriction adjacente un angle de rotation de 90 degrés, et est muni d'une lampe UVA (2) de puissance 15 W. Chaque restriction (1), de forme illustrée en détail sur la figure 10A, occupe les trois-quarts de la section transversale du réacteur et laisse passer la lampe (2) en son centre. Toutes les surfaces internes - paroi (3) du réacteur et restrictions (1) - du réacteur ont été recouvertes par spray d'une masse de TiO₂ de 2,0 g pour une surface totale de 5620 cm², les dimensions de chaque module étant de 5 x 5 x 26 cm.

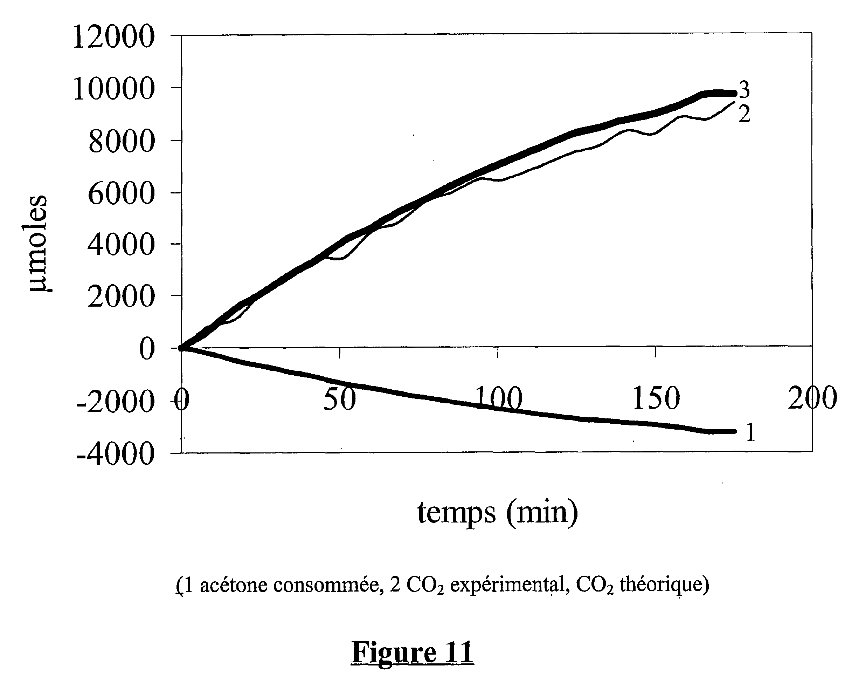

Le fonctionnement de ce réacteur pour la dégradation de l'acétone a été étudié avec un débit de gaz à travers le réacteur de 27 m³/h, le réacteur étant placé dans une enceinte étanche en polyméthacrylate de méthyle d'un volume de 950 litres. 3390 µmoles d'acétone sont introduites à l'entrée du réacteur. Après une période de 15 minutes permettant de stabiliser la concentration d'acétone à un niveau constant, les lampes UVA sont allumées. La dégradation de l'acétone et la production des produits de dégradation (CO₂ ,expérimental) sont suivies par chromatographie en phase gazeuse (microchromatographe gazeux Quadh de la société AGILENT) et représentées sur la figure 11, ainsi que la valeur théorique de CO₂ en fonction de l'acétone disparue. La figure 11 illustre clairement, par comparaison entre la valeur théorique et la valeur expérimentale de CO₂, que la minéralisation de l'acétone est totale, les seuls produits de réaction étant CO₂ et H₂O. La vitesse d'oxydation calculée est égale à 17 µmoles.m²/h/g/W.

Ce indique une utilisation très efficace de l'énergie lumineuse dans un réacteur à paroi interne réfléchissante recouverte de catalyseur.

### EXAMPLE 24 - autres modes de construction du dispositif

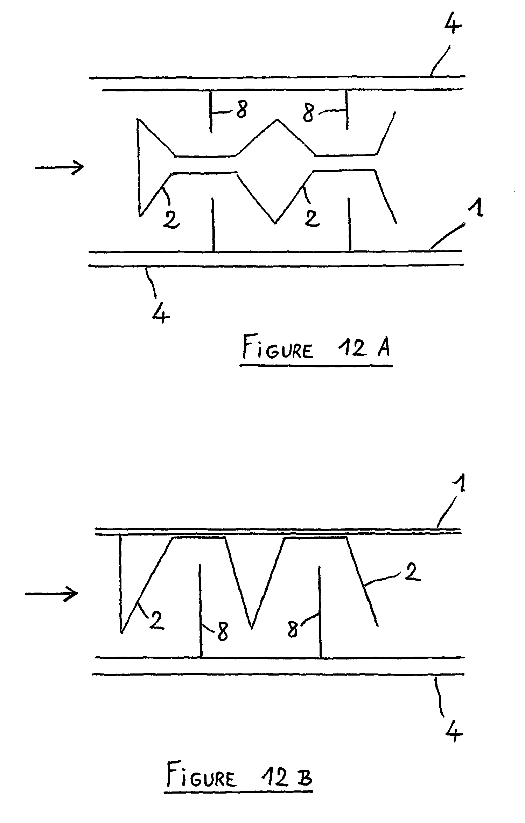

La figure 12 représente en coupe longitudinale deux autres modes de construction (parmi d'innombrables possibilités) A et B du dispositif selon l'invention, comportant un réacteur (1) d'axe longitudinal, un ou des éléments de support (2) de catalyseur faisant obstruction à l'écoulement gazeux, au moins un moyen d'obstruction (8) et une source lumineuse (4), par exemple cylindrique placée à l'extérieur du réacteur, la direction de l'écoulement gazeux étant indiquée par une flèche sur le côté gauche de la figure.

## Revendications

1. Dispositif d'épuration d'un effluent gazeux contenant des contaminants, ledit dispositif comprenant :
- un réacteur ayant un axe longitudinal et comprenant au moins une entrée pour le gaz à épurer et au moins une sortie pour le gaz épuré,
- au moins une source de rayonnement ultraviolet ou visible, et
- au moins un élément de support, disposé à l'intérieur du réacteur et revêtu d'un catalyseur formant une surface catalytique exposée et capable d'oxyder au moins partiellement les contaminants sous l'action de rayonnement ultraviolet ou visible délivré par la source,
**caractérisé** d'une part par la présence, à l'intérieur du réacteur, d'au moins deux moyens d'obstruction, chacun desdits moyens d'obstruction obstruant partiellement l'écoulement de l'effluent gazeux depuis ladite entrée jusqu'à ladite sortie et générant une zone de gaz turbulent de son côté aval par rapport à l'écoulement de l'effluent gazeux, la surface de chacun desdits moyens d'obstruction telle que projetée sur un plan orthogonal à l'axe longitudinal du réacteur occupant au moins 1/3 de la section interne du réacteur disponible pour l'écoulement de l'effluent gazeux, et d'autre part par le fait qu'une surface catalytique est disposée dans chaque dite zone de gaz turbulent de façon à ce que l'écoulement de gaz turbulent soit incident sur ladite surface catalytique.

2. Dispositif d'épuration d'un effluent gazeux selon la revendication 1, **caractérisé en ce que** l'un au moins desdits moyens d'obstruction est un élément de support.

3. Dispositif selon l'une des revendications 1 et 2, **caractérisé en ce qu'**en outre il comprend ou bien est fonctionnellement associé à des moyens propres à amplifier un écoulement turbulent du gaz à épurer dans le réacteur.

4. Dispositif selon l'une des revendications 1 à 3, **caractérisé en ce que** les moyens d'obstruction sont répartis de manière discontinue selon l'axe longitudinal du réacteur.

5. Dispositif selon l'une des revendications 1 à 4, **caractérisé en ce que** chaque moyen d'obstruction s'inscrit dans un plan disposé perpendiculairement ou quasi-perpendiculairement à la direction d'écoulement de l'effluent gazeux à épurer, c'est-à-dire selon un angle de 60° à 120° avec celle-ci.

6. Dispositif selon l'une des revendications 1 à 5, **caractérisé en ce que** le nombre et la forme des moyens d'obstruction sont choisis de manière à procurer un ralentissement de 10% à 90% de l'effluent gazeux à épurer par rapport à la vitesse qu'aurait celui-ci dans le même réacteur sans moyens d'obstruction.

7. Dispositif selon l'une des revendications 1 à 6, **caractérisé en ce que** l'intérieur du réacteur est au moins partiellement garni d'une surface réfléchissante.

8. Dispositif selon la revendication 7, **caractérisé en ce que** ladite surface réfléchissante est revêtue d'un catalyseur capable d'oxyder au moins partiellement les contaminants sous l'action de rayonnement ultraviolet ou visible délivré par la source.

9. Dispositif selon la revendication 7, **caractérisé en ce que** la surface réfléchissante recouverte de catalyseur procure une réflexion du rayonnement ultraviolet ou visible supérieure à 20%.

10. Procédé d'épuration d'un effluent gazeux utilisant un dispositif d'épuration conforme à l'une des revendications 1 à 9.

11. Kit d'éléments destinés à constituer, par assemblage, un dispositif d'épuration d'un effluent gazeux contenant des contaminants, ledit kit comprenant :
- un réacteur ayant un axe longitudinal et comprenant au moins une entrée pour le gaz à épurer et au moins une sortie pour le gaz épuré,
- au moins une source de rayonnement ultraviolet ou visible, et
- au moins un élément de support, destiné à être disposé à l'intérieur du réacteur et revêtu d'un catalyseur formant une surface catalytique exposée capable d'oxyder au moins partiellement les contaminants sous l'action de rayonnement ultraviolet ou visible délivré par la source,
ledit kit étant **caractérisé en ce qu'**il comprend au moins deux moyens d'obstruction destinés à être disposés à l'intérieur du réacteur, chacun desdits moyens d'obstruction étant prévu pour obstruer partiellement l'écoulement de l'effluent gazeux depuis ladite entrée jusqu'à ladite sortie et pour générer une zone de gaz turbulent de son côté aval par rapport à l'écoulement de l'effluent gazeux, la surface de chacun desdits moyens d'obstruction telle que projetée sur un plan orthogonal à l'axe longitudinal du réacteur occupant au moins 1/3 (un tiers) de la section interne du réacteur disponible pour l'écoulement de l'effluent gazeux, et par le fait qu'une surface catalytique est disposée dans chaque dite zone de gaz turbulent de façon à ce que l'écoulement de gaz turbulent soit incident sur ladite surface catalytique.

12. Kit d'éléments selon la revendication 11, **caractérisé en ce qu'**il comprend en outre des moyens destinés à amplifier un écoulement turbulent du gaz à épurer dans le réacteur, tels que des moyens de ventilation forcée ou de convection thermique.

## Patentansprüche

1. Reinigungsvorrichtung für eine gasförmige Ausströmung, die Verunreinigungen enthält, wobei die Vorrichtung Folgendes aufweist:
- einen Reaktor, der eine Längsachse aufweist, und welcher mindestens einen Einlass für das zu reinigende Gas und mindestens einen Auslass für das gereinigte Gas aufweist;
- mindestens eine Quelle ultravioletter oder sichtbarer Strahlung; und
- mindestens ein Tragelement, welches im Inneren des Reaktors angeordnet und mit einem Katalysator bedeckt ist, der eine katalytische Oberfläche bildet, die exponiert und dazu geeignet ist, zumindest teilweise die Verunreinigungen unter der Einwirkung der von der Quelle gelieferten ultravioletten oder sichtbaren Strahlung zu oxidieren,
**gekennzeichnet** zum Einen durch das Vorhandensein von zumindest zwei Hinderniseinrichtungen im Inneren des Reaktors, wobei jede dieser Hinderniseinrichtungen die Strömung der gasförmigen Ausströmung von dem Einlass bis zu dem Auslass teilweise behindert und einen turbulenten Gasbereich auf ihrer in Bezug auf die Strömung der gasförmigen Ausströmung stromabwärts liegenden Seite erzeugt, wobei die Oberfläche einer jeden dieser Hinderniseinrichtungen als solche auf einer zur Längsachse des Reaktors orthogonalen Fläche projiziert mindestens 1/3 des für die Strömung der gasförmigen Ausströmung verfügbaren internen Querschnitts des Reaktors einnimmt, und **gekennzeichnet** zum Anderen durch die Tatsache, dass eine katalytische Oberfläche in jedem turbulenten Gasbereich dergestalt angeordnet ist, dass die turbulente Gasströmung auf die katalytische Oberfläche auftrifft.

2. Reinigungsvorrichtung für eine gasförmige Ausströmung nach Anspruch 1, **dadurch gekennzeichnet, dass** zumindest eine der Hinderniseinrichtungen ein Tragelement ist.

3. Reinigungsvorrichtung nach einem der Ansprüche 1 und 2, **dadurch gekennzeichnet, dass** sie außerdem geeignete Einrichtungen zur Verstärkung einer turbulenten Strömung des zu reinigenden Gases in dem Reaktor aufweist beziehungsweise mit diesen funktionell zusammenhängend ausgebildet ist.

4. Reinigungsvorrichtung nach einem der Ansprüche 1 bis 3, **dadurch gekennzeichnet, dass** die Hinderniseinrichtungen in unregelmäßiger Weise entlang der Längsachse des Reaktors verteilt angeordnet sind.

5. Reinigungsvorrichtung nach einem der Ansprüche 1 bis 4, **dadurch gekennzeichnet, dass** jede Hinderniseinrichtung in einer Ebene angeordnet ist, welche senkrecht oder quasi senkrecht zur Strömungsrichtung der zu reinigenden gasförmigen Ausströmung steht, das heißt gemäß einem Winkel von 60° bis 120° mit dieser.

6. Reinigungsvorrichtung nach einem der Ansprüche 1 bis 5, **dadurch gekennzeichnet, dass** die Anzahl und Form der Hinderniseinrichtungen dergestalt ausgewählt sind, dass eine Verlangsamung der zu reinigenden gasförmigen Ausströmung um 10% bis 90% in Bezug auf die Geschwindigkeit verursacht wird, welche diese in demselben Reaktor ohne Hinderniseinrichtungen aufweisen würde.

7. Reinigungsvorrichtung nach einem der Ansprüche 1 bis 6, **dadurch gekennzeichnet, dass** das Innere des Reaktors zumindest teilweise mit einer reflektierenden Oberfläche ausgestattet ist.

8. Reinigungsvorrichtung nach Anspruch 7, **dadurch gekennzeichnet, dass** die reflektierende Oberfläche mit einem Katalysator bedeckt ist, welcher dazu geeignet ist, zumindest teilweise die Verunreinigungen unter der Einwirkung der von der Quelle gelieferten ultravioletten oder sichtbaren Strahlung zu oxidieren.

9. Reinigungsvorrichtung nach Anspruch 7, **dadurch gekennzeichnet, dass** die mit dem Katalysator bedeckte reflektierende Oberfläche eine Reflexion der ultravioletten oder sichtbaren Strahlung von mehr als 20% verursacht.

10. Verfahren zum Reinigen einer gasförmigen Ausströmung unter Verwendung einer Reinigungsvorrichtung nach einem der Ansprüche 1 bis 9.

11. Bauelementesatz, vorgesehen zur Bildung einer Reinigungsvorrichtung für eine gasförmige Ausströmung, die Verunreinigungen enthält, durch Zusammenbau, wobei der Bausatz Folgendes aufweist:
- einen Reaktor, der eine Längsachse aufweist, und welcher mindestens einen Einlass für das zu reinigende Gas und mindestens einen Auslass für das gereinigte Gas aufweist;
- mindestens eine Quelle ultravioletter oder sichtbarer Strahlung; und
- mindestens ein Tragelement, welches im Inneren des Reaktors angeordnet und mit einem Katalysator bedeckt ist, der eine katalytische Oberfläche bildet, die exponiert und dazu geeignet ist, zumindest teilweise die Verunreinigungen unter der Einwirkung der von der Quelle gelieferten ultravioletten oder sichtbaren Strahlung zu oxidieren,
wobei der Bausatz **dadurch gekennzeichnet ist, dass** er zumindest zwei Hinderniseinrichtungen aufweist, die zur Anordnung im Inneren des Reaktors bestimmt sind, wobei jede dieser Hinderniseinrichtungen zur teilweisen Behinderung der Strömung der gasförmigen Ausströmung von dem Einlass bis zu dem Auslass und zur Erzeugung eines turbulenten Gasbereichs auf ihrer in Bezug auf die Strömung der gasförmigen Ausströmung stromabwärts liegenden Seite vorgesehen ist, wobei die Oberfläche einer jeden dieser Hinderniseinrichtungen als solche auf einer zur Längsachse des Reaktors orthogonalen Fläche projiziert mindestens 1/3 (ein Drittel) des für die Strömung der gasförmigen Ausströmung verfügbaren internen Querschnitts des Reaktors einnimmt, und durch die Tatsache **gekennzeichnet** ist, dass eine katalytische Oberfläche in jedem turbulenten Gasbereich dergestalt angeordnet ist, dass die turbulente Gasströmung auf die katalytische Oberfläche auftrifft.

12. Bauelementesatz nach Anspruch 11, **dadurch gekennzeichnet, dass** er außerdem Einrichtungen aufweist, die zur Verstärkung einer turbulenten Strömung des zu reinigenden Gases in dem Reaktor vorgesehen sind, wie solche Einrichtungen zur erzwungenen Ventilation oder zur thermischen Konvektion.

## Claims

1. Device for purifying a gaseous effluent containing contaminants, the said device comprising:
- a reactor having a longitudinal axis and comprising at least one inlet for the gas to be purified and at least one outlet for the purified gas,
- at least one source of ultraviolet or visible radiation, and
- at least one support element, placed inside the reactor and coated with a catalyst forming an exposed catalytic surface and capable of at least partially oxidizing the contaminants under the action of ultraviolet or visible radiation delivered by the source,
**characterized** on the one hand by the presence, inside the reactor, of at least two obstruction means, each of the said obstruction means partially obstructing the flow of the gaseous effluent from the said inlet to the said outlet and generating a turbulent gas zone on its downstream side with respect to the flow of the gaseous effluent, the surface area of each of the said obstruction means as projected on a plane perpendicular to the longitudinal axis of the reactor occupying at least 1/3 of the internal cross section of the reactor available for the flow of the gaseous effluent, and, on the other hand, by the fact that a catalytic surface is placed in each said turbulent gas zone so that the flow of turbulent gas is incident to the said catalytic surface.

2. Device for purifying a gaseous effluent according to Claim 1, **characterized in that** at least one of the said obstruction means is a support element.

3. Device according to either of Claims 1 and 2, **characterized in that**, furthermore, it comprises or is functionally associated with means capable of amplifying a turbulent flow of the gas to be purified in the reactor.

4. Device according to one of Claims 1 to 3, **characterized in that** the obstruction means are distributed discontinuously along the longitudinal axis of the reactor.

5. Device according to one of Claims 1 to 4, **characterized in that** each obstruction means is inscribed in a plane placed perpendicular or virtually perpendicular to the flow direction of the gaseous effluent to be purified, that is, at an angle of 60° to 120° to it.

6. Device according to one of Claims 1 to 5, **characterized in that** the number and the shape of the obstruction means are selected so as to obtain a 10% to 90% slowdown of the gaseous effluent to be purified with respect to the speed that it would have in the same reactor without obstruction means.

7. Device according to one of Claims 1 to 6, **characterized in that** the interior of the reactor is at least partially lined with a reflecting surface.

8. Device according to Claim 7, **characterized in that** the said reflecting surface is coated with a catalyst capable of at least partially oxidizing the contaminants under the action of ultraviolet or visible radiation delivered by the source.

9. Device according to Claim 7, **characterized in that** the reflecting surface covered with catalyst procures a reflection of the ultraviolet or visible radiation greater than 20%.

10. Method for purifying a gaseous effluent using a purification device according to one of Claims 1 to 9.

11. Kit of elements designed to form, by assembly, a device for purifying a gaseous effluent containing contaminants, the said kit comprising:
- a reactor having a longitudinal axis and comprising at least one inlet for the gas to be purified and at least one outlet for the purified gas,
- at least one source of ultraviolet or visible radiation, and
- at least one support element, intended to be placed inside the reactor and coated with a catalyst forming an exposed catalytic surface capable of at least partially oxidizing the contaminants under the action of ultraviolet or visible radiation delivered by the source,
the said kit being **characterized in that** it comprises at least two obstruction means intended to be placed inside the reactor, each of the said obstruction means being provided for partially obstructing the flow of the gaseous effluent from the said inlet to the said outlet and generating a turbulent gas zone on its downstream side with respect to the flow of the gaseous effluent, the surface area of each of the said obstruction means as projected on a plane perpendicular to the longitudinal axis of the reactor occupying at least 1/3 (one third) of the internal cross section of the reactor available for the flow of the gaseous effluent, and by the fact that a catalytic surface is placed in each said turbulent gas zone so that the flow of turbulent gas is incident to the said catalytic surface.

12. Kit of elements according to Claim 11, **characterized in that** it further comprises means intended for amplifying a turbulent flow of the gas to be purified in the reactor, such as forced ventilation or thermal convection means.
